(19) Europäisches Patentamt
European Patent Office
Office européen des brevets

(11) **EP 4 015 233 A1**

(12) **EUROPEAN PATENT APPLICATION**
published in accordance with Art. 153(4) EPC

(43) Date of publication:
**22.06.2022 Bulletin 2022/25**

(21) Application number: **20852536.0**

(22) Date of filing: **07.08.2020**

(51) International Patent Classification (IPC):
**B44C 1/17** (2006.01)    **B41M 5/00** (2006.01)
**B41M 5/382** (2006.01)    **B41M 5/50** (2006.01)
**B41M 5/52** (2006.01)    **C09J 7/10** (2018.01)
**B32B 7/023** (2019.01)

(52) Cooperative Patent Classification (CPC):
**B32B 7/023; B41M 5/00; B41M 5/382; B41M 5/50;
B41M 5/52; B44C 1/17; C09J 7/10;** Y02P 20/10

(86) International application number:
**PCT/JP2020/030365**

(87) International publication number:
**WO 2021/029358 (18.02.2021 Gazette 2021/07)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **14.08.2019 JP 2019148922**

(71) Applicant: **DAI NIPPON PRINTING CO., LTD.
Tokyo 162-8001 (JP)**

(72) Inventors:
• **KOBAYASHI, Yoshimasa
Tokyo 162-8001 (JP)**
• **MATSUI, Hiroto
Tokyo 162-8001 (JP)**
• **YODA, Shinya
Tokyo 162-8001 (JP)**

(74) Representative: **Müller-Boré & Partner
Patentanwälte PartG mbB
Friedenheimer Brücke 21
80639 München (DE)**

(54) **RECORDING MEDIUM, DECORATIVE SHEET, DECORATIVE ARTICLE, AND PRODUCTION METHOD FOR DECORATIVE ARTICLE**

(57) To provide a recording medium or a separation-member-equipped recording medium that enables manufacturing of a printed object, a decorative sheet or the like having novel design properties, to provide a method for manufacturing a decorative sheet or a decorated article that enables manufacturing of a decorated article having novel design properties, and to provide a decorated article having novel design properties.

Provided is a recording medium 100 which is used for forming an image, the recording medium 100 including a support body 1, and an image forming layer 10 provided on the support body 1, wherein light transmittance in a visible light region of the whole of the recording medium is 10% or more, and glossiness of the recording medium which is measured with a condition of a measurement angle being 45° is 60 or less.

Fig.9A

Fig.9B

SEPARATION INTERFACE

EP 4 015 233 A1

**Description**

Technical Field

The present disclosure relates to a recording medium, a separation-member-equipped recording medium, a decorative sheet, a separation-member-equipped decorative sheet, a decorated article, a method for manufacturing a decorated article, and a combination of a recording medium and a transfer sheet.

Background Art

As a method for manufacturing a printed object, there is a known method where an image is formed on an image forming layer of a recording medium. An image can be formed on the image forming layer by any of various image forming systems. As the image forming system, there are known systems, such as a sublimation type thermal transfer system, a melt type thermal transfer system, an inkjet printing system, and a toner printing system.

Recently, an attempt has been made to form a printed object, which is manufactured by using a recording medium, into a decorative sheet, and to use this decorative sheet for the decoration of an article, which is a decoration target. In-mold molding, insert molding and the like are known as methods for decorating an article by using a decorative sheet. Patent Literature 1 proposes a decorative sheet where a cured image layer made of an inkjet ink composition is provided on a resin sheet, and a method for manufacturing a decorated article by using such a decorative sheet.

Citation List

Patent Literature

Patent Literature 1: Japanese Patent Laid-Open No. 2013-43935

Summary of Invention

Technical Problem

A main object of the present disclosure is to provide a recording medium that enables manufacturing of an article having novel design properties, to provide a separation-member-equipped recording medium that enables manufacturing of an article having novel design properties, to provide a decorative sheet that enables manufacturing of a decorated article having novel design properties, to provide a separation-member-equipped decorative sheet that enables manufacturing of a decorated article having novel design properties, to provide a method for manufacturing a decorated article that enables manufacturing of a decorated article having novel design properties, to provide a combination of a recording medium and a transfer sheet that enables manufacturing of an article having novel design properties, and to provide a decorated article having novel design properties.

Solution to Problem

A recording medium of one embodiment of the present disclosure is a recording medium which is used for forming an image, the recording medium including: a support body; and an image forming layer provided on the support body, wherein light transmittance in a visible light region of a whole of the recording medium is 10% or more, and glossiness of the recording medium which is measured with a condition of a measurement angle being 45° is 60 or less.

In a separation-member-equipped recording medium of one embodiment of the present disclosure, a separation member capable of being separated from the recording medium is provided to a support body side of the recording medium of the present disclosure.

A decorative sheet of one embodiment of the present disclosure includes: a support body; and an image forming layer provided on the support body, wherein light transmittance in a visible light region of a whole of the decorative sheet is 10% or more, and glossiness of the decorative sheet which is measured with a condition of a measurement angle being 45° is 60 or less.

In a separation-member-equipped decorative sheet of one embodiment of the present disclosure, a separation member capable of being separated from the decorative sheet of the present disclosure is provided to a support body side of the decorative sheet.

In a decorated article of one embodiment of the present disclosure, the decorative sheet of the present disclosure is integrated with a decoration target.

A method for manufacturing a decorated article of one embodiment of the present disclosure includes: an image forming step of forming an image on the image forming layer of the recording medium of the present disclosure; and an integration step of integrating the recording medium with a decoration target after the image forming step.

A method for manufacturing a decorated article of one embodiment of the present disclosure includes: an image forming step of forming an image on the image forming layer of the separation-member-equipped recording medium of the present disclosure; a separation step of separating the separation member after the image forming step; and an integration step of integrating the recording medium with a decoration target after the separation step.

A method for manufacturing a decorated article of one embodiment of the present disclosure includes: an image forming step of forming an image on the image forming layer of the separation-member-equipped recording medium of the present disclosure; an integration step of integrating the separation-member-equipped recording medium with a decoration target after the image forming step; and a separation step of separating the separation member after the integration step.

A method for manufacturing a decorated article of one embodiment of the present disclosure includes: an integration step of integrating a decorative sheet with a decoration target; and a functional layer forming step of forming a functional layer on a surface of the decorative sheet on a side opposite to the decoration target after the integration step, wherein the decorative sheet includes a support body and an image layer, and the functional layer forming step is a step of forming a functional layer such that light transmittance in a visible light region of a whole of a stacked body formed of the decorative sheet and the functional layer is 10% or more and glossiness of the stacked body which is measured with a condition of a measurement angle being 45° is 60 or less.

In a combination of a recording medium and a transfer sheet of one embodiment of the present disclosure, the recording medium includes a support body and an image layer, the transfer sheet includes a base material and a transfer layer capable of being peeled off from the base material, and a transfer article is obtained by transferring the transfer layer of the transfer sheet onto the recording medium, the transfer article having light transmittance in a visible light region being 10% or more and glossiness measured with a condition of a measurement angle being 45° being 60 or less.

Advantageous Effect of Invention

The recording medium of the present disclosure and the separation-member-equipped recording medium of the present disclosure enable manufacturing of a printed object having novel design properties, a decorative sheet having novel design properties, or the like. The decorative sheet of the present disclosure, the separation-member-equipped decorative sheet of the present disclosure, the method for manufacturing a decorated article of the present disclosure, and the combination of a recording medium and a transfer sheet of the present disclosure enable manufacturing of a decorated article having novel design properties. The decorated article of the present disclosure has novel design properties.

Brief Description of Drawings

[FIG. 1] FIG. 1 is a schematic cross-sectional view showing one example of a recording medium of the present disclosure.

[FIG. 2] FIG. 2 is a schematic cross-sectional view showing one example of the recording medium of the present disclosure.

[FIG. 3] FIG. 3 is a schematic cross-sectional view showing one example of the recording medium of the present disclosure.

[FIG. 4] FIG. 4 is a schematic cross-sectional view showing one example of a separation-member-equipped recording medium of the present disclosure.

[FIG. 5] FIG. 5 is a schematic cross-sectional view showing one example of the separation-member-equipped recording medium of the present disclosure.

[FIG. 6] FIG. 6 is a schematic cross-sectional view showing one example of a decorative sheet of the present disclosure.

[FIG. 7] FIG. 7 is a schematic cross-sectional view showing one example of a separation-member-equipped decorative sheet of the present disclosure.

[FIG. 8] FIG. 8A is a schematic cross-sectional view showing one example of the decorative sheet of the present disclosure, and FIG. 8B is a schematic cross-sectional view showing one example of the separation-member-equipped decorative sheet of the present disclosure.

[FIG. 9] FIG. 9A is a schematic cross-sectional view showing one example of the decorative sheet of the present disclosure, and FIG. 9B is a schematic cross-sectional view showing one example of the separation-member-equipped decorative sheet of the present disclosure.

[FIG. 10] FIG. 10 is a schematic cross-sectional view showing one example of a decorated article according to an embodiment of the present disclosure.

[FIG. 11] FIG. 11 is a process diagram showing one example of a method for manufacturing a decorated article of the present disclosure.

[FIG. 12] FIG. 12 is a process diagram showing one example of the method for manufacturing a decorated article of the present disclosure.

[FIG. 13] FIG. 13 is a process diagram showing one example of the method for manufacturing a decorated article of the present disclosure.

[FIG. 14] FIG. 14 is a process diagram showing one example of the method for manufacturing a decorated article of the present disclosure.

[FIG. 15] FIG. 15 is a process diagram showing one example of the method for manufacturing a decorated article of the present disclosure.

[FIG. 16] FIG. 16 is a schematic cross-sectional view showing one example of a transfer sheet.

Description of Embodiment

Hereinafter, an embodiment of the present disclosure will be described with reference to drawings and the like. The present disclosure may be carried out in many different modes, and should not be construed as being limited to the contents given in the description of the embodiment exemplified below. In the drawings, widths, thicknesses, shapes, and the like of respective components may be shown schematically rather than in the actual mode to further clarify the description. However, such widths, thicknesses, shapes, and the like of the respective components are given for the sake of example, and do not limit the interpretation of the present disclosure. In the specification of this application and respective drawings, an element that is similar to an element described with reference to an already-described drawing is given the same reference symbol, and the detailed description of such an element may be omitted when appropriate. Further, for the sake of convenience of the description, the description is made by using terms, such as upper or lower. However, the vertical direction may be inverted. The same applies for the lateral direction.

<<Recording medium>>

A recording medium according to the embodiment of the present disclosure (hereinafter referred to as "recording medium of the present disclosure") will be described with reference to drawings.

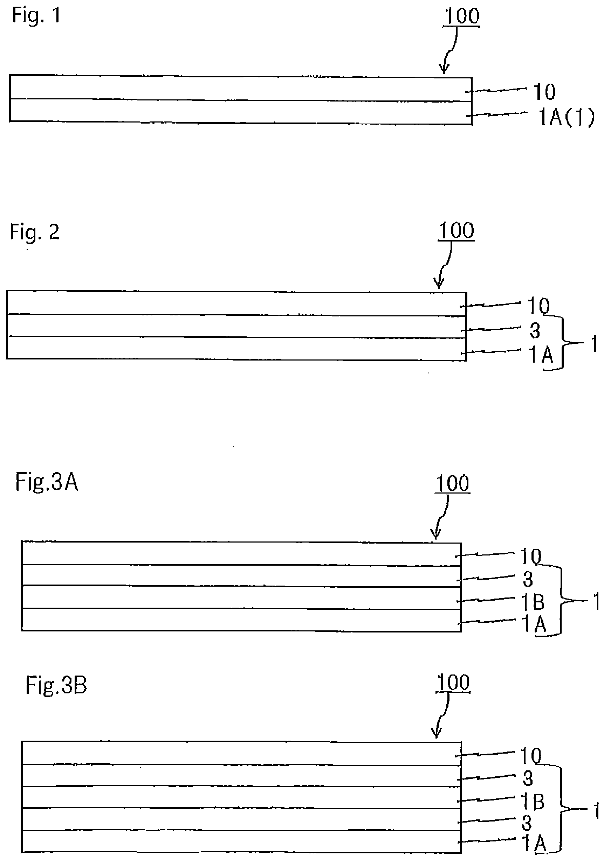

A recording medium 100 of the present disclosure includes a support body 1 and an image forming layer 10 provided on the support body 1 (see FIG. 1 to FIG. 3). In the present disclosure, the support body 1 means all components other than the image forming layer 10 of components forming the recording medium 100.

In the recording medium 100 of the present disclosure, the light transmittance in the visible light region of the whole of the recording medium is 10% or more and glossiness measured with the condition of a measurement angle being 45° is 60 or less. The recording medium 100 of the present disclosure has see-through feeling and mat feeling. The recording medium 100 of the present disclosure can be the recording medium 100 having transparency and reduced glossiness. By forming an image on the image forming layer 10, the recording medium 100 of the present disclosure allows the manufacture of a printed object and a decorative sheet. The manufactured printed object has novel design properties. The manufactured decorative sheet can decorate a decoration target, thus allowing the manufacture of a decorated article having novel design properties. Hereinafter, the glossiness of the recording medium 100 which is measured with the condition of the measurement angle being 45° is referred to as "glossiness of the recording medium".

In the present disclosure, transparency includes not only colorless transparency but also translucency and colored transparency.

In the present disclosure, "the light transmittance in the visible light region of the whole of the recording medium" means the light transmittance in the visible light region of a stacked body formed of all components forming the recording medium 100. The light transmittance in the visible light region is light transmittance measured by a device obtained by attaching an integrating sphere attachment ISR-3100 (made by SHIMADZU CORPORATION) to a spectrophotometer (UV-3100PC made by SHIMADZU CORPORATION). Specifically, a recording medium being a measurement target is installed on the sample beam side of this device, a polyethylene terephthalate film with a thickness of 16 $\mu$m is installed on the reference beam side as a blank, and light transmittance in the visible light region ranging from 380 nm to 780 nm is measured. In the present disclosure, "the light transmittance in the visible light region of the whole of the recording medium 100 is 10% or more" means that light transmittance in any of all visible light regions is 10% or more.

In the present disclosure, "the glossiness of the recording medium 100" means the glossiness of the recording medium 100 which is measured at an incident angle being 45° by a method in accordance with JIS-K-7105 by using Haze Meter (VG7000 made by NIPPON DENSHOKU INDUSTRIES CO., LTD.).

The glossiness of the recording medium 100 may be measured from the image forming layer 10 side of the recording medium 100 or may be measured from the support body 1 side of the recording medium 100. In the present disclosure, "the glossiness of the recording medium 100 is 60 or less" means that glossiness measured from one of either the image forming layer 10 side or the support body 1 side is 60 or less.

It is sufficient that the recording medium 100 of the present disclosure include a portion where the light transmittance in the visible light region of the whole of the recording medium is 10% or more and glossiness measured with the condition of the measurement angle being 45° is 60 or less.

The recording medium 100 of the present disclosure may include a portion where the light transmittance in the visible light region of the whole of the recording medium is less than 10%.

The recording medium 100 of the present disclosure may include a portion where the glossiness of the recording medium 100 which is measured with the condition of the measurement angle being 45° is greater than 60.

In an example recording medium 100 of the present disclosure, the portion, where the light transmittance in the visible light region of the whole of the recording medium is 10% or more and the glossiness of the recording medium 100 which is measured with the condition of the measurement angle being 45° is 60 or less, is 50% or more of an effective region. The effective region refers to the size of a printed object or a decorative sheet manufactured by using the recording medium 100 of the present disclosure when viewed in a plan view.

Hereinafter, each component of the recording medium 100 of the present disclosure will be described by giving an example. The recording medium 100 of the present disclosure is not limited to a mode described hereinafter.

It is preferable that the light transmittance in the visible light region of the whole of the recording medium 100 of the present disclosure be 10% or more and 80% or less. In the recording medium 100 of this mode, the whole of the recording medium 100 has a more novel see-through feeling.

(Image forming layer)

The recording medium 100 of the present disclosure includes the support body 1 and the image forming layer 10 provided on the support body 1.

An image can be formed on the image forming layer 10 by any of various image forming systems. The image forming layer 10 may include a predetermined image in advance. The kind of image forming layer 10 and components of the image forming layer 10 are not limited, and can be suitably set corresponding to an image to be formed on the image forming layer 10. The image forming layer 10 may contain one or two or more components.

The light transmittance in the visible light region of the image forming layer 10 per se is not limited, and it is sufficient that the image forming layer 10 can set the light transmittance in the visible light region of the whole of the recording medium 100 to 10% or more. An example image forming layer 10 has transparency that can set the light transmittance in the visible light region of the whole of the recording medium 100 to 10% or more.

Examples of a representative method for forming an image performed by using a printer or the like include a sublimation type thermal transfer system, a melt type thermal transfer system, an inkjet printing system, a toner printing system (laser printing system), or the like.

The sublimation type thermal transfer system is an image forming system where a thermal transfer sheet, to which a coloring material layer containing sublimable dye is provided, is used, and heat energy corresponding to image information is applied to the thermal transfer sheet, thus causing the sublimable dye contained in the coloring material layer to shift to the image forming layer 10 so as to form an image.

The melt type thermal transfer system is an image forming system where a thermal transfer sheet, to which a coloring material layer including melt ink is provided, is used, and heat energy corresponding to image information is applied to the thermal transfer sheet, thus transferring the whole of the coloring material layer, which is melted or softened due to the application of heat energy, to the image forming layer 10 so as to form an image.

The inkjet printing system is an image forming system where inkjet ink is ejected from a nozzle by a pressure wave generated by a piezoelectric drive or ink in a tube is caused to generate air bubbles by heating to eject the ink, for example, thus causing the ink to adhere to the image forming layer 10 so as to form an image. The toner printing system is an image forming system where toner is fixed (fused) to the image forming layer 10 by an electrostatic transfer system with heat from a laser or the like.

An image may be formed by an offset printing system, a gravure printing system, a flexographic printing system, a screen printing system, or the like. An image may also be formed by a printing system other than the above-mentioned printing systems.

The example image forming layer 10 contains components capable of receiving sublimable dye. The image forming layer 10 of this mode allows the formation of a clear image with a high density by the sublimation type thermal transfer system.

Examples of the components capable of receiving sublimable dye include an acrylic resin, an acrylic-styrene copolymer, polyolefin, polyvinyl chloride, polyvinylidene chloride, polyvinyl acetate, a vinyl chloride-vinyl acetate copolymer, an ethylene-vinyl acetate copolymer, polyacrylic ester, polyester, polystyrene, polyamide, copolymer of ethylene or olefine and another vinyl polymer, ionomer, a cellulose resin, polycarbonate, an epoxy resin, polyvinylpyrrolidone, polyvinyl alcohol, and gelatin. An example of polyolefin includes polypropylene. Examples of polyester include polyethylene terephthalate, and polybutylene terephthalate.

The image forming layer 10 of a preferred mode contains at least one of a vinyl chloride-vinyl acetate copolymer, an acrylic-styrene copolymer, polyester, or an epoxy resin. Of the above-mentioned components, the image forming layer 10 containing a vinyl chloride-vinyl acetate copolymer allows the formation of an image with a higher density by the sublimation type thermal transfer system. Therefore, such an image forming layer 10 is preferable.

The thickness of the image forming layer 10 is not limited, and can be suitably set corresponding to a method for forming an image and the like. The thickness of the image forming layer 10 allowing the formation of an image by the thermal transfer system is preferably 0.1 $\mu$m or more and 10 $\mu$m or less. The thickness of the image forming layer 10 allowing the formation of an image by the inkjet printing system is preferably 0.1 $\mu$m or more and 50 $\mu$m or less, is more preferably 1 $\mu$m or more and 40 $\mu$m or less, and is further preferably 3 $\mu$m or more and 30 $\mu$m or less. The thickness of the image forming layer 10 allowing the formation of an image by the toner printing system is preferably 0.01 $\mu$m or more and 5 $\mu$m or less, and is more preferably 0.05 $\mu$m or more and 1 $\mu$m or less.

A method for forming the image forming layer 10 is not limited. The image forming layer 10 may be formed by laminating a film or the like forming the image forming layer 10 on the support body 1, or may be formed by applying and drying a coating liquid for an image forming layer.

(Support body)

The recording medium 100 of the present disclosure includes the support body 1 (see FIG. 1 to FIG. 3). The support body 1 may have a single-layer structure (see FIG. 1) or may have a stacked structure (see FIG. 2 and FIG. 3). The support body 1 of a mode shown in FIG. 2 has a stacked structure where a layer 1A and a primer layer 3 are stacked. The support body 1 of a mode shown in FIG. 3A has a stacked structure where the layer 1A, a layer 1B, and the primer layer 3 are stacked in this order. The support body 1 of a mode shown in FIG. 3B has a stacked structure where the layer 1A, the primer layer 3, the layer 1B, and the primer layer 3 are stacked in this order. The support body 1 may include a layer other than the layers of the modes shown in the drawings.

An example primer layer 3 contains bonding components. An example support body 1 has a stacked structure including the primer layer 3 (see FIG. 2 and FIG. 3). An example support body 1 has a stacked structure including a plurality of base materials, and includes the primer layer 3 provided between other base materials. An example support body 1 includes the primer layer 3 located on the surface of the example support body 1 on the image forming layer 10 side. Examples of the bonding components include a urethane resin, polyolefin, polyester, an acrylic resin, an epoxy resin, a urea resin, a melamine resin, a phenol resin, a vinyl chloride-vinyl acetate copolymer, polyimide, polyvinyl acetate, cyanoacrylate, and synthetic rubber. An example of polyolefin includes an $\alpha$-olefine-maleic anhydride copolymer. A layer obtained by curing bonding components with a curing agent may be used. The layer obtained by curing the bonding components with a curing agent has excellent bonding properties and heat resistance. Examples of the curing agent include isocyanate compound, aliphatic amine, cycloaliphatic amine, aromatic amine, and acid anhydride. It may also be possible to use a base material to which no primer layer 3 is provided and where the surface has bonding properties or a base material which has a surface to which bonding treatment is applied.

An example support body 1 includes a film base material. The film base material may also be referred to as "resin base material", "resin sheet", or the like. For example, the layer 1A of the mode shown in FIG. 1 and FIG. 2 may be formed of the film base material. Either one or both of the layer 1A and the layer 1B of the mode shown in FIG. 3 may be formed of the film base material. Examples of the film base material include polyester, such as polyethylene terephthalate and polyethylene naphthalate, polyolefin, polyvinyl chloride, polymethacrylate, polypropylene, polycarbonate, cellulose acetate, polyethylene derivative, polyamide, and polymethylpentene. These film base materials may be stretched film base materials or may be unstretched film base materials. The support body 1 may include three or more film base materials.

It is sufficient that the support body 1 have light transmittance that can set the light transmittance in the visible light region of the whole of the recording medium 100 to 10% or more. In the case where the support body 1 has a stacked structure, it is sufficient that each component of the support body 1 have light transmittance that can set the light transmittance in the visible light region of the whole of the recording medium 100 to 10% or more. In the case where the support body 1 includes the primer layer 3 and the film base material, it is sufficient to use, as the primer layer and the film base material, a transparent primer layer and a transparent film base material that can set the transmittance of the whole of the recording medium 100 to 10% or more. The transparent primer layer and the transparent film base material may be used as glossiness adjusting layers which will be described later.

(Glossiness adjusting layer)

In an example recording medium 100 of the present disclosure, the support body 1 includes the glossiness adjusting layer. The glossiness adjusting layer is a layer for adjusting the glossiness of the recording medium 100 to 60 or less.

In an example recording medium 100, the support body 1 includes one or a plurality of glossiness adjusting layers. In the example recording medium 100, the glossiness of the recording medium 100 is adjusted to 60 or less by the glossiness adjusting layer. The glossiness of the glossiness adjusting layer per se (the glossiness of the single glossiness adjusting layer) is not limited. By taking into account components other than the glossiness adjusting layer, it is sufficient to use a glossiness adjusting layer that can set the glossiness of the recording medium to 60 or less. The glossiness of the single glossiness adjusting layer may be less than 60 or may be 60 or more. The glossiness of the recording medium 100 may be adjusted to 60 or less by combining one or a plurality of glossiness adjusting layers having glossiness of less than 60. The glossiness of the recording medium 100 may be adjusted to 60 or less by combining one or a plurality of glossiness adjusting layers having glossiness of 60 or more. The glossiness of the recording medium 100 may be adjusted to 60 or less by combining one or the plurality of glossiness adjusting layers having glossiness of less than 60 and one or the plurality of glossiness adjusting layers having glossiness of 60 or more. Examples of the glossiness adjusting layer include a void layer and an uneven layer.

(Void layer)

An example of the void layer include a film base material (or a resin base material) having voids therein, or the like. Examples of the void layer include a layer obtained by kneading inorganic particles into a polymer and generating voids by using the inorganic particles as cores when the mixture is stretched, a layer obtained by mixing a polymer that is immiscible with a resin being a main component into the resin and generating voids when the mixture is stretched, or the like. One polymer may be used, or two or more polymers may be used. Voids in the void layer may also be referred to as "micro-voids" or "holes". The void layer may also be referred to as "porous layer", "porous film", or the like.

In the case where the void layer is used as the glossiness adjusting layer, the glossiness of the recording medium 100 that includes the support body 1 including the void layer can be adjusted by suitably setting the size of voids, the ratio of the voids, the thickness of the void layer, and the like.

The thickness of the void layer is not limited. The thickness of an example void layer is 10 $\mu$m or more and 150 $\mu$m or less. The recording medium 100 that includes the void layer having such a thickness allows the formation of an image with a higher density.

(Uneven layer)

The surface of the uneven layer has an uneven structure, and glossiness is adjusted by an uneven portion. The uneven layer may have the uneven structure on the image forming layer 10 side, or may have the uneven structure on the side opposite to the image forming layer 10 side. The uneven layer may have the uneven structure on each of both the image forming layer 10 side and the side opposite to the image forming layer 10 side.

An example uneven layer contains particles, and portions of the particles protrude. In this uneven layer, the uneven structure is formed by protruding portions and non-protruding portions of the particles.

An example uneven layer contains particles, so that the surface of the uneven layer is raised. In this uneven layer, the uneven structure is formed by raised portions and non-raised portions.

An example uneven layer is a film containing particles.

An example uneven layer is a film into which particles are kneaded.

An example uneven layer is a film to which surface treatment is applied. In this uneven layer, the uneven structure is formed by applying surface treatment.

Examples of the particles include inorganic particles, and organic particles. Examples of such particles include silica, calcium carbonate, barium sulfate, titanium oxide, porous particles, hollow particles, talc, dicarboxylic acid ester amide, and polyethylene. A coating layer or the like that is obtained by applying and drying a coating liquid may also be used as the uneven layer, the coating liquid being obtained by dispersing or dissolving particles and binder in a suitable solvent. Examples of a method for applying surface treatment to form the uneven structure include embossing, and blasting.

In the case where the uneven layer is used as the glossiness adjusting layer, the glossiness of the recording medium 100 can be adjusted by suitably setting the height of the protruding portion of the unevenness, a distance between a recessed portion and a protruding portion, the thickness of the uneven layer, and the like.

The glossiness adjusting layer has light transmittance that can set the light transmittance in the visible light region of the whole of the recording medium 100 to 10% or more. In the case where the film base material is used as the glossiness adjusting layer, such as the void layer or the uneven layer, it is sufficient to use a transparent film base material having voids therein or a transparent film base material with the surface having the uneven structure.

The support body 1 may have a single-layer structure formed of only the glossiness adjusting layer, or may have a stacked structure including a plurality of glossiness adjusting layers. For example, either one or both of the layer 1A and the layer 1B of the mode shown in FIG. 3A and FIG. 3B may be used as the glossiness adjusting layer. The support body 1 may include another layer besides the glossiness adjusting layer.

The primer layer 3 may be used as the glossiness adjusting layer. The surface of an example primer layer 3 has the uneven structure. In the mode shown in FIG. 3, two or more layers may be used as the glossiness adjusting layer. For example, either one or both of the layer 1A and the layer 1B of the mode shown in FIG. 3 and the primer layer 3 may be used as the glossiness adjusting layer. By taking into account the thickness or the like of the primer layer, it is preferable to use a layer other than the primer layer 3, for example, the film base material, as the glossiness adjusting layer.

In the recording medium 100 of a preferred mode, the support body 1 has a stacked structure including the glossiness adjusting layer, and the glossiness adjusting layer is located at a position farthest from the image forming layer 10. An example support body 1 has a stacked structure including the primer layer 3, the layer 1A and the like (see FIG. 2, FIG. 3A, and FIG. 3B), and the layer 1A is the glossiness adjusting layer. In this mode, the glossiness of the recording medium 100 can be easily adjusted to 60 or less. This mode can achieve more excellent design properties when a printed object or a decorative sheet 150 manufactured by using the recording medium 100 of the present disclosure is viewed from the support body 1 side. This mode can also achieve excellent design properties when a decorated article manufactured by integrating the decorative sheet with the decoration target is viewed from the support body 1 side. In this case, it is preferable to integrate the decorative sheet with the decoration target on the image forming layer 10 side. It is also preferable that glossiness measured from the support body 1 side be 60 or less. In the case where a decoration target having transparency is used, it is possible to achieve excellent design properties when the manufactured decorated article is viewed from the decoration target side. An example layer 1A shown in the respective drawings is a transparent film base material (void layer) having voids therein or is a transparent film base material (uneven layer) with the surface having the uneven structure.

The glossiness adjusting layer may be provided between the support body 1 and the image forming layer 10.

An example recording medium 100 of the present disclosure has a single-layer structure including a functional layer or has a stacked structure including the functional layer. In the example recording medium 100, the support body 1 includes the functional layer. An example support body 1 has the stacked structure including the plurality of base materials, and the functional layer is located between other base materials. A plurality of functional layers may be located with a predetermined distance therebetween in the direction of the surface. A plurality of functional layers may be located in the thickness direction. The plurality of functional layers may overlap with each other in the thickness direction or may not overlap with each other. A plurality of same functional layers may be used, or a plurality of different functional layers may be used. In an example recording medium 100 of the present disclosure, the functional layer is located between the support body 1 and the image forming layer 10. In an example recording medium 100 of the present disclosure, the functional layer is located at a portion between the support body 1 and the image forming layer 10. In an example recording medium 100 of the present disclosure, the functional layer is located on the image forming layer 10. An example recording medium 100 of the present disclosure includes the functional layer located on the outermost surface.

An example functional layer is located on the surface of the support body 1 on the side opposite to the image forming layer 10. Examples of such a functional layer include a sensitive layer, a fingerprint resistant layer, an antistatic layer, or the like. An example of the sensitive layer includes a layer including a foamed material, or the like. The above-mentioned void layer or uneven layer may be used as the sensitive layer. The fingerprint resistant layer has fingerprint resistance.

In the case of a separation-member-equipped recording medium 100X which will be described later, the functional layer located on the surface of the support body 1 on the side opposite to the image forming layer 10 may be used as an adhesive layer. In an example adhesive layer, adhesiveness increases after treatment, or adhesiveness develops after treatment. In an example adhesive layer, heating or the like increases adhesiveness, or heating or the like develops adhesiveness. The functional layer may be used as the glossiness adjusting layer.

An example functional layer is a decoration layer. Examples of the decoration layer include a particle-containing layer, a colored layer, and a vapor deposition layer. The above-mentioned void layer or uneven layer may be used as the decoration layer. The decoration layer may be used as the glossiness adjusting layer.

Examples of particles contained in the particle-containing layer include inorganic particles and organic particles. Examples of such particles include silica, calcium carbonate, barium sulfate, titanium oxide, porous particles, hollow particles, talc, dicarboxylic acid ester amide, and polyethylene.

A colored layer as an example contains colorant. Examples of the colorant include dye, organic coloring pigment, fluorescent pigment, calcium carbonate, titanium oxide, zinc oxide, silica, carbon black, iron oxide, yellow iron oxide, ultramarine blue, hologram powder, aluminum powder, metallic pigment, and pearl pigment.

The functional layer may be partially located. In this case, the light transmittance in the visible light region of the whole of the recording medium at the portion where the functional layer is located may be less than 10%, and the glossiness of the recording medium 100 which is measured with the condition of the measurement angle being 45° may be greater than 60.

It is also possible to use a functional layer that can set the light transmittance in the visible light region of the whole of the recording medium at the portion where the functional layer is located to 10% or more, and that can set glossiness measured with the condition of the measurement angle being 45° to 60 or less.

An example support body 1 includes one or a plurality of layers selected from the sensitive layer, the fingerprint resistant layer, the antistatic layer, the adhesive layer, the particle-containing layer, the colored layer, and the vapor deposition layer.

The thickness of the support body 1 is not limited. However, it is preferable that the thickness of the support body 1 be 1 μm or more and 300 μm or less. The thickness of the recording medium 100 is not limited. It is sufficient to suitably determine the thickness of the recording medium 100 by, for example, taking into account the method for forming an image which is adopted when an image is formed on the image forming layer 10. For example, in the case where an image is formed in a printer, it is sufficient to set the thickness of the recording medium 100 to a thickness that takes into account conveyance capability of the printer. The thickness of an example recording medium 100 is 100 μm or less. By manufacturing a decorated article by using the recording medium 100 having such a thickness, it is possible to achieve excellent appearance of the decorated article, for example. In the case where the printer has insufficient conveyance capability or the like when the thickness of the recording medium 100 is set to 100 μm, it is sufficient to use the separation-member-equipped recording medium 100X of the present disclosure and to suitably determine the thickness and the like of a separation member.

The recording medium 100 of the present disclosure allows the formation of an image on the image forming layer 10, thus manufacturing a printed object having novel design properties. The recording medium 100 of the present disclosure where an image is formed on the image forming layer 10 may be used as the decorative sheet 150. The decorative sheet obtained by using the recording medium 100 of the present disclosure allows the manufacture of a decorated article having novel design properties.

<<Separation-member-equipped recording medium>>

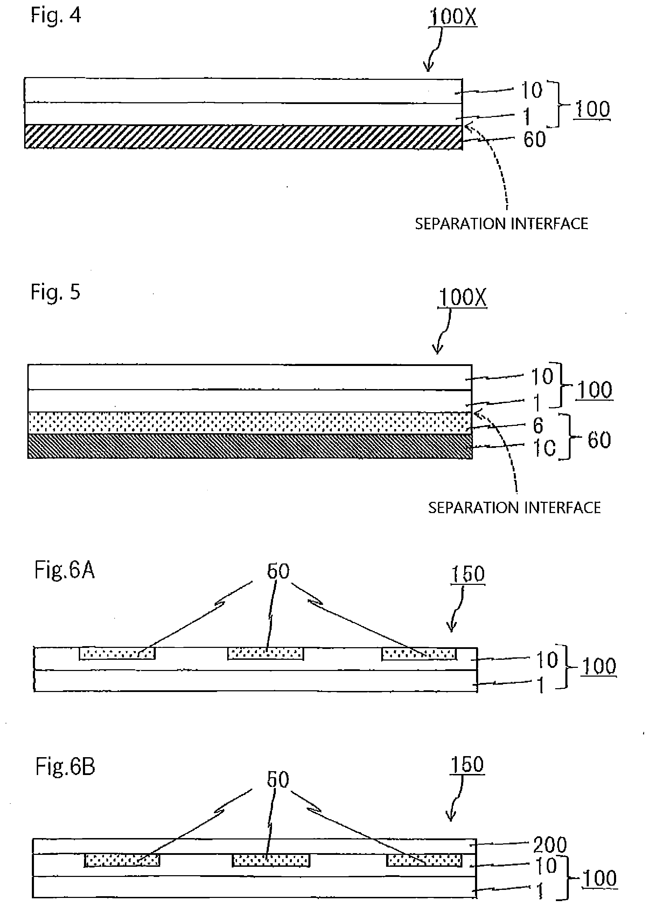

Next, the separation-member-equipped recording medium according to the embodiment of the present disclosure (hereinafter referred to as "separation-member-equipped recording medium of the present disclosure") will be described. In the separation-member-equipped recording medium 100X of the present disclosure, a separation member 60 is provided to the support body 1 side of the recording medium 100 (see FIG. 4 and FIG. 5). The separation member 60 can be separated from the recording medium 100. The separation member 60 may be a separation member that can be separated from the recording medium 100 with the application of heat energy, or may be a separation member that can be separated from the recording medium 100 without the application of heat energy. The configuration of a conventionally known intermediate transfer medium that includes a base material and a transfer layer including a receiving layer may be used in the separation-member-equipped recording medium 100X of the present disclosure. In this case, it is sufficient to use the base material portion of the intermediate transfer medium as the separation member 60, and to use the transfer layer portion of the intermediate transfer medium as the recording medium 100.

For the recording medium 100 of the separation-member-equipped recording medium 100X of the present disclosure, the recording medium 100 of the present disclosure may be used without any change.

An image can be formed on the image forming layer 10 of the recording medium 100 of the present disclosure. In the case where an image is formed by a printer, it is preferable to set the thickness of the recording medium 100 to a thickness that can achieve excellent conveyance capability in the printer. On the other hand, there is a demand for reducing the thickness of a printed object, a decorative sheet or the like that is manufactured by forming an image on the image forming layer 10 of the recording medium 100 of the present disclosure. For example, by taking into account appearance of a decorated article manufactured by using the decorative sheet, there may be a case where it is preferable to set the thickness of the recording medium 100, which is used to obtain the decorative sheet, to 100 μm or less.

In the separation-member-equipped recording medium 100X of the present disclosure, it is possible to increase the apparent thickness of the whole of the recording medium 100 due to the thickness of the separation member 60. By suitably adjusting the thickness of the separation member 60, the thickness of the whole of the separation-member-equipped recording medium 100X can be set to a thickness suitable for conveyability of the printer. Such a separation-member-equipped recording medium 100X of the present disclosure has excellent conveyability and the like at the time of forming an image. Such a separation-member-equipped recording medium 100X of the present disclosure allows the formation of a clear image on the image forming layer 10.

The separation-member-equipped recording medium 100X of the present disclosure can achieve excellent handleability.

By separating the separation member 60 after the image is formed, it is possible to reduce the thickness of a printed object manufactured by using the recording medium 100 or a decorative sheet manufactured by using the recording medium 100. The thickness of the recording medium 100 of an example separation-member-equipped recording medium 100X is 100 μm or less, and the thickness of an example separation-member-equipped recording medium 100X is greater than 100 μm.

The measure of separating the separation member 60 may be taken on the separation member 60 side or may be taken on the support body 1 side. The measure to separate the separation member 60 may be taken on both the separation member 60 side and the support body 1 side.

An example separation member 60 includes a separation member base material 1C and a separation assisting layer 6, and the separation assisting layer 6 is in contact with the support body 1 of the recording medium 100 (see FIG. 5).

(Separation member base material)

The separation member base material 1C is not limited, and a film base material, a paper base material, or the like exemplified above may be suitably selected and used. Examples of the paper base material include woodfree paper, coated paper, resin coated paper, art paper, cast coated paper, paperboard, synthetic paper (polyolefin-based synthetic paper, polystyrene-based synthetic paper), synthetic-resin-impregnated paper or emulsion-impregnated paper, synthetic rubber latex-impregnated paper, synthetic resin added paper, cellulose fiber paper, or the like. The separation member base material 1C may have a single-layer structure, or may have a stacked structure where the above-mentioned film base material, paper base material and the like are stacked. An example separation member base material 1C includes a primer layer that is brought into contact with the separation assisting layer 6. The separation member 60 is ultimately separated from the recording medium 100 and hence, it is unnecessary to take into account the light transmittance of the separation member 60, the glossiness of the separation member 60, or the like. For example, by using an inexpensive paper base material or the like as the separation member base material 1C, it is possible to achieve the above-mentioned various advantageous effects while reducing the manufacturing cost of the separation-member-equipped recording medium 100X.

An example separation member base material 1C has a stacked structure where a primer layer, the void layer, the film base material, and a paper base material are stacked in this order from the separation assisting layer 6 side. In the case where the separation member base material 1C is caused to have a stacked structure including the film base material, the paper base material and the like, these base materials may be laminated by using a primer layer or the like, or may be laminated by EC sandwich lamination, which uses polyethylene or the like. The separation member base material 1C may have a single-layer structure.

(Separation assisting layer)

An example separation assisting layer 6 serves as the adhesive layer. Examples of components contained in the adhesive layer include an acrylic resin, a vinyl resin, polyester, a urethane resin, polyamide, an epoxy resin, a rubber-based resin, an ionomer resin, and a silicone resin. It is also possible to use components having bonding properties other than the above-mentioned components.

An example adhesive layer is in contact with the support body 1. Bonding strength between the adhesive layer and the support body 1 is lower than bonding strength between the adhesive layer and the component of the separation member base material 1C. The adhesive layer of this mode allows the separation of the separation member 60 at the interface between the support body 1 and the adhesive layer. By applying the bonding treatment to a portion of the separation member base material 1C that is brought into contact with the adhesive layer, such separation can be achieved. The bonding treatment includes forming of the primer layer.

A configuration may be adopted where the separation assisting layer 6 is formed of a melt extrusion resin layer to allow the separation of the separation member 60 from the recording medium 100. The melt extrusion resin layer is a resin layer obtained by extruding a melted resin into a film shape by an extruder. An example of the extruder includes a T-die, or the like. Examples of an extrusion method include conventionally known extruding methods, such as an extruded coat lamination method, a sandwich lamination method, and a tandem lamination method.

A configuration may be adopted where the separation assisting layer 6 is formed of a release film, separate paper, a separate film, a peeling film, or peeling paper, for example, to allow the separation of the separation member 60 from the recording medium 100.

In place of or together with the separation member 60 including the separation assisting layer 6, a layer that is brought into contact with the separation member 60 among layers forming the support body 1 may be used as a peeling layer. In this mode, the interface between the peeling layer and the separation member 60 can be used as a separation interface, thus allowing the separation of the separation member 60 from the recording medium 100. For example, the layer 1A of the support body 1 of the recording medium 100 of the mode shown in FIG. 1 to FIG. 3 is used as the peeling layer, and the separation member 60 may be provided on this peeling layer.

(Peeling layer)

Examples of the component of the peeling layer include waxes, silicone wax, a silicone resin, a silicone-modified resin, a fluororesin, a fluorine-modified resin, polyvinyl alcohol, an acrylic resin, a thermally crosslinkable epoxy-amino resin, a thermally crosslinkable alkyd-amino resin, or the like. It is preferable that the thickness of the peeling layer be 0.5 $\mu$m or more and 5 $\mu$m or less.

For the peeling layer, it is sufficient to use a layer that can set the light transmittance in the visible light region of the whole of the recording medium to 10% or more and that can set glossiness measured with the condition of the measurement angle being 45° to 60 or less. The peeling layer may be used as the glossiness adjusting layer. Examples of such a peeling layer include a peeling layer with the separation-member-side surface having the uneven structure, a peeling layer having voids therein, or the like.

A configuration may be adopted where the separation member 60 is caused to have the stacked structure to allow the separation of a portion of the separation member 60 between any other components forming the separation member 60. That is, the separation member may be separated in a stepwise manner. For example, in the mode shown in FIG. 5, a configuration may be adopted where the separation member base material 1C is caused to have a stacked structure including a plurality of base materials to allow the separation of a portion of the separation member base material 1C. For example, a configuration may be adopted where the separation member base material 1C is caused to have the stacked structure to allow the separation of a portion of the separation member base material 1C by using an interface between any other components of the separation member base material 1C as a separation interface before the separation is made at the interface between the separation member 60 and the support body 1 of the recording medium 100. Such a mode can be achieved (i) by using a plurality of separation assisting layers 6, or (ii) by causing the support body 1 to include the peeling layer and by providing the separation assisting layer 6 between the components of the separation member base material 1C, for example.

<<Decorative sheet>>

Next, the decorative sheet according to the embodiment of the present disclosure (hereinafter referred to as "decorative sheet of the present disclosure") will be described. The decorative sheet 150 of the present disclosure includes the support body 1 and the image forming layer 10 provided on the support body 1.

The decorative sheet 150 of the present disclosure can provide decoration properties to a decoration target 300. The decorative sheet 150 of the present disclosure can be used for manufacturing a decorated article where the decorative sheet 150 is integrated with the decoration target 300.

In the decorative sheet 150 of the present disclosure, the light transmittance in the visible light region of the whole of the decorative sheet 150 is 10% or more and glossiness measured with the condition of the measurement angle being 45° is 60 or less. The decorative sheet 150 of the present disclosure has see-through feeling and mat feeling. The decorative sheet 150 of the present disclosure can be the decorative sheet 150 having transparency and reduced glossiness. With the decorative sheet 150 of the present disclosure, by forming an image on the image forming layer 10 and, thereafter, by integrating the image forming layer 10 with the decoration target 300, it is possible to manufacture a decorated article 400 having novel design properties.

Methods for measuring light transmittance and glossiness of the decorative sheet 150 of the present disclosure are similar to the measurement methods described with respect to the above-mentioned recording medium 100 of the present disclosure.

The decorative sheet 150 of the present disclosure may be a sheet where an image 50 is formed on the image forming layer 10 as shown in FIG. 6A and FIG. 6B. The recording medium 100 of the present disclosure may be used as the decorative sheet 150 of the present disclosure. A sheet where an image is formed on the image forming layer 10 of the recording medium 100 of the present disclosure may be used as the decorative sheet 150 of the present disclosure. A method for measuring light transmittance in the visible light region and glossiness of the decorative sheet 150 where an image is formed on the image forming layer is similar to the measurement method described with respect to the above-mentioned recording medium 100 of the present disclosure. In this case, a region where an image is not formed is taken as the measurement region.

An image to be formed is not limited, and an example of the image to be formed includes an image formed by any of various methods for forming an image described with respect to the above-mentioned recording medium 100 of the present disclosure. In the decorative sheet 150 of a preferred mode, the image 50 formed on the image forming layer 10 is a thermal transfer image formed by a sublimation type thermal transfer recording system or a melt type thermal transfer recording system. It is more preferable that the image 50 formed on the image forming layer 10 be a thermal transfer image formed by the sublimation type thermal transfer recording system. By using a thermal transfer image for the image 50 formed on the image forming layer 10, it is possible to achieve the decorative sheet 150 that allows the manufacture of a decorated article having higher design properties.

The decorated article manufactured by using the decorative sheet 150 of the present disclosure is a decorated article where the decorative sheet 150 of the present disclosure is integrated with the decoration target 300. In other words, the decorated article manufactured by using the decorative sheet 150 of the present disclosure is a decorated article obtained by laminating the decorative sheet 150 of the present disclosure to the decoration target 300. The surface of an example decorative sheet 150 on the decoration target side has bonding properties. The bonding layer is located on the surface of an example decorative sheet 150 on the decoration target side. The bonding treatment is applied to the surface of an example decorative sheet 150 on the decoration target side. The surface of an example decoration target on the decorative sheet 150 side has bonding properties. The bonding layer is located on the surface of an example decoration target on the decorative sheet 150 side. The bonding treatment is applied to the surface of an example decoration target on the decorative sheet 150 side.

In the case where the decoration target 300 has bonding properties, it is not always necessary for the surface of the decorative sheet 150 of the present disclosure on the decoration target side to have bonding properties. Examples of such a decorative sheet 150 include the recording medium 100 of the present disclosure, a sheet where an image is formed on the image forming layer 10 of the recording medium 100 of the present disclosure, or the like (see FIG. 6A).

(Bonding layer)

In an example decorative sheet 150, a bonding layer 200 is provided on the image forming layer 10 on which an image is formed (see FIG. 6B). In an example decorative sheet 150, a bonding layer is located at a position farthest from the image forming layer 10 of layers forming the support body 1 (not shown in the drawing). It is sufficient that the bonding layer 200 have transparency that can set the light transmittance in the visible light region of the whole of the decorative sheet 150 to 10% or more.

Even in the case where the decoration target 300 per se has no bonding property, by merely causing the bonding layer 200 side of the decorative sheet 150 to overlap with the decoration target 300, the decorative sheet 150 provided with the bonding layer 200 allows the manufacture of a decorated article where the decorative sheet 150 is integrated with the decoration target 300.

In the case where the bonding layer 200 is provided on the image forming layer 10, the decorative sheet 150 of the present disclosure can be integrated with the decoration target 300 on the image forming layer 10 side. In this mode, the decorated article 400 obtained by integrating has a stacked structure where the decoration target 300, the bonding layer 200, the image forming layer 10, and the support body 1 are provided in this order. In the decorated article 400 of this mode, the image 50 formed on the image forming layer 10 can be protected by the support body 1.

The bonding layer 200 may be provided to the surface on the support body 1 side. An example support body 1 includes the bonding layer 200 located on the outermost surface. In this mode, the decorative sheet 150 of the present disclosure can be integrated with the decoration target 300 on the support body 1 side of the decorative sheet 150. As described with respect to the recording medium 100 of the present disclosure, the adhesive layer may be provided to the surface on the support body 1 side.

The bonding layer 200 contains bonding components. Examples of the bonding components include an acrylic resin, a vinyl chloride-vinyl acetate copolymer, a vinyl acetate resin, polyester, an epoxy resin, polyimide, synthetic rubber, or the like. The bonding layer 200 may contain one or two or more bonding components. The bonding layer 200 may be formed of a bonding film, or may be formed of a bonding sheet. It is preferable that the thickness of the bonding layer 200 be 1 $\mu$m or more and 1000 $\mu$m or less.

The bonding layer 200 may have a single-layer structure, or may have a stacked structure where layers having bonding properties are stacked. An example bonding layer has a stacked structure where a layer having bonding properties is provided to each of both surfaces of a member having no bonding property. An example bonding layer has a stacked structure where a layer having bonding properties is provided to each of both surfaces of a film or the like. An example bonding layer is formed by applying and drying a coating liquid containing bonding components.

(Masking member)

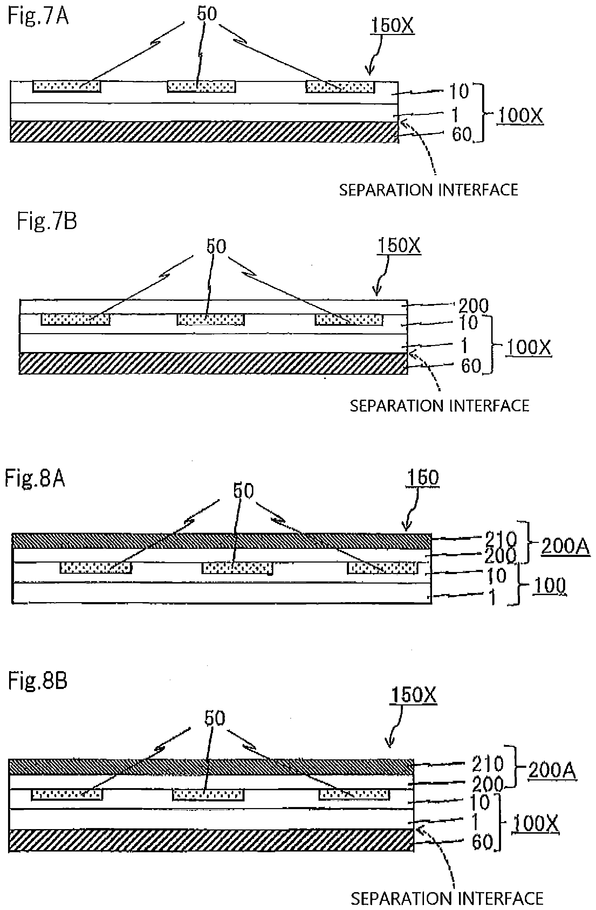

In the decorative sheet 150 of the mode shown in FIG. 8A, a masking member 210 is provided on the bonding layer 200 of the decorative sheet 150 of the mode shown in FIG. 6B. In other words, a masking-member-equipped bonding layer 200A is provided on the image forming layer 10 of the decorative sheet 150. The decorative sheet 150 of the mode shown in FIG. 8 can suppress adhesion of the bonding layer 200 to the support body 1 or to the separation member 60 when the decorative sheet 150 is stored in a rolled manner, for example. Further, by merely causing the decorative sheet 150 from which the masking member 210 is peeled off to overlap with the decoration target 300, it is possible to manufacture a decorated article where the decorative sheet 150 is integrated with the decoration target 300.

The light transmittance in the visible light region and glossiness defined with respect to the decorative sheet 150 of the present disclosure are values measured after the masking member is peeled off.

Examples of the masking member 210 include a release film, separate paper, a separate film, a peeling film, peeling paper, or the like. The masking member 210 may be formed of a resin layer. An example masking member 210 contains components having releasability. Examples of the components having releasability include a silicone resin, a fluororesin, an aminoalkyd resin, a melamine resin, an acrylic resin, polyester, wax, or the like.

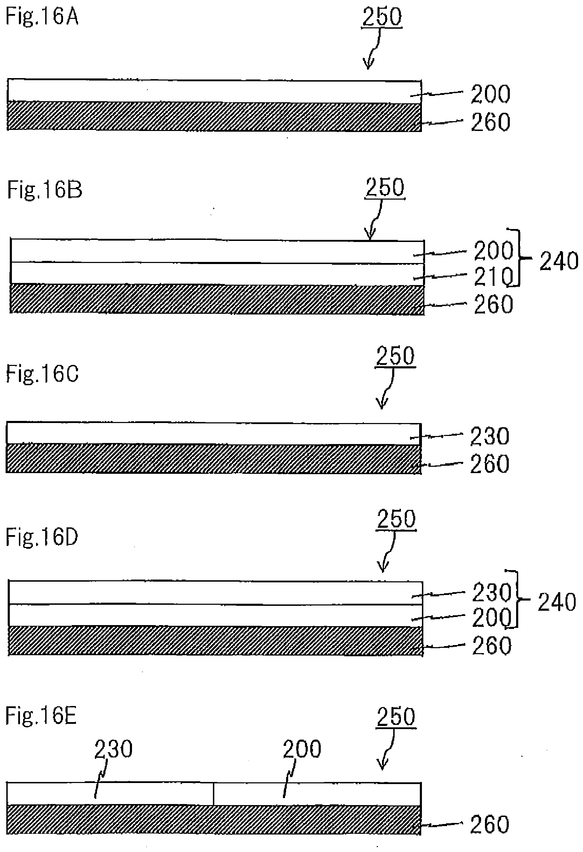

The bonding layer 200 may be formed in such a manner that an image is formed on the image forming layer 10 of the recording medium 100 of the present disclosure and, thereafter, a film forming the bonding layer 200, a sheet forming the bonding layer 200, or the like is laminated to the image forming layer 10 side. The bonding layer 200 may be formed on the image forming layer 10 by transfer by using a transfer sheet 250 where the bonding layer 200 capable of being peeled off from a base material 260 is provided to the base material 260 of the transfer sheet as shown in FIG. 16A. The bonding layer 200 of the transfer sheet 250 may be a bonding layer that can be transferred with the application of heat energy, or may be a bonding layer that can be transferred without the application of heat energy. Further, the bonding layer may be formed on the image forming layer 10 side by applying and drying a coating liquid where bonding components are dispersed or dissolved in a suitable solvent. The formation of the bonding layer 200 by using a bonding film or a bonding sheet and the formation of the bonding layer 200 by transfer can suppress blurring of the image 50 formed on the image forming layer 10 compared with a method where a coating liquid is applied and dried. Therefore, such formations are preferable.

The masking-member-equipped bonding layer 200A may be formed by lamination or by transfer. FIG. 16B is a schematic cross-sectional view showing one example of the transfer sheet 250 that can transfer the masking-member-equipped bonding layer 200A. In the transfer sheet 250 of the mode shown in FIG. 16B, a transfer layer 240 capable of being peeled off from the base material 260 is provided on the base material 260. The transfer layer 240 has a stacked structure where the masking member 210 and the bonding layer 200 are stacked in this order from the base material 260 side. The transfer sheet 250 of the mode shown in FIG. 16B can form the masking-member-equipped bonding layer 200A by transferring the transfer layer 240. In an example transfer sheet 250, a release layer or the like is provided between the base material 260 and the bonding layer 200 or between the base material 260 and the masking member 210. The release layer is a layer that remains on the base material 260 side when the transfer layer is transferred.

The transfer sheet 250 of the mode shown in FIG. 16A or FIG. 16B may be a transfer sheet 250 where one or a plurality of coloring material layers are sequentially provided to the bonding layer 200 or the masking-member-equipped bonding layer (not shown in the drawing). With such a transfer sheet 250, an image can be formed on the image forming layer 10 of the recording medium 100 and the bonding layer 200 can be transferred onto the recording medium 100 or a decorative sheet 300 by one transfer sheet. It is sufficient to suitably determine a coloring material layer according to an image forming system that is adopted when the image 50 is formed on the image forming layer 10 of the recording medium 100. In the case where an image is formed on the image forming layer 10 by the sublimation type thermal transfer system, it is sufficient to form the coloring material layer by a dye layer containing dye, such as yellow dye, magenta dye, cyan dye, or fluorescent dye. In the case where an image is formed on the image forming layer 10 by the melt type thermal transfer system, it is sufficient to form the coloring material layer by a melt ink layer containing colorant, such as black pigment, metallic pigment, and pearl pigment. A transfer sheet 250 where the dye layer and the melt ink layer are sequentially provided may also be adopted. The same applies for a transfer sheet 250 which includes a durable layer 230 or which includes the transfer layer 240 including the durable layer 230 shown in FIG. 16C, FIG. 16D, or FIG. 16E. The modes shown in the respective drawings may be combined.

The bonding layer 200 or the masking-member-equipped bonding layer 200A may be formed on the support body 1 side of the recording medium 100. In the case where the separation-member-equipped recording medium 100X of the present disclosure is used, it is sufficient to form the bonding layer or the masking-member-equipped bonding layer after the separation member 60 is separated.

(Durable layer)

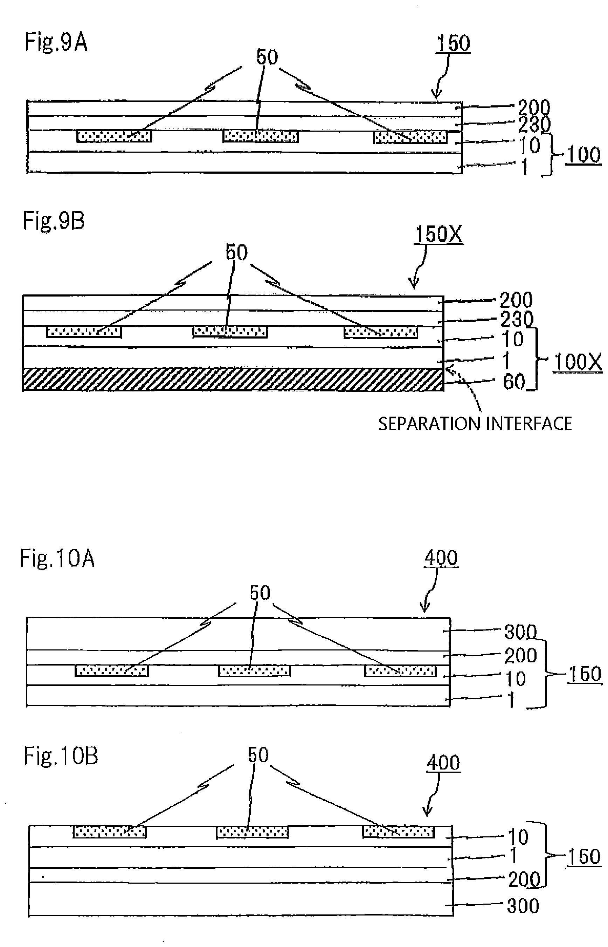

In the case where the bonding layer 200 is provided to the image forming layer 10 side, as shown in FIG. 9A, it is preferable to provide the durable layer 230 between the bonding layer 200 and the image forming layer 10 on which the image 50 is formed. The decorative sheet 150 of this mode can suppress shifting of the components of the image 50 formed on the image forming layer 10 to the bonding layer 200. Therefore, it is possible to suppress the occurrence of blurring of the thermal transfer image 50, for example.

In an example decorative sheet 150, the durable layer 230 is provided on the image forming layer 10, and the durable layer 230 is located on the surface (not shown in the drawing). When the decoration target 300 to which the bonding layer 200 is provided is used, and the decorative sheet 150 is integrated with such a decoration target 300 on the image forming layer 10 side of the decorative sheet 150, the decorative sheet 150 having such a configuration can suppress shifting of components of the image 50, which is formed on the image forming layer 10, to the bonding layer 200 of the decoration target 300. By causing the durable layer 230 to be located on the surface, it is possible to cause a decorated article, which is manufactured by integrating the decorative sheet 150 with the decoration target 300 on the support body 1 side of the decorative sheet 150, to have a stacked structure where the decoration target 300, the support body 1, the image forming layer 10, and the durable layer 230 are stacked in this order. In the decorated article of this mode, an image on the image forming layer 10 can be protected by the durable layer 230.

An acrylic resin, polyester, polyurethane, a vinyl chloride-vinyl acetate copolymer, a cellulose resin, polyvinylpyrrolidone, or polyvinyl alcohol, for example, is contained as the component of the durable layer 230. The durable layer 230 may contain one or two or more components.

The durable layer 230 of a preferred mode has a single-layer structure or a stacked structure, and includes a first layer X that satisfies the following relational expression (1). The durable layer 230 of this mode can suppress blurring of the image 50 and can increase thermal durability of the durable layer 230. The durable layer 230 having high thermal durability can suppress unintentional melting of the durable layer 230 and unintentional softening of the durable layer 230, for example, at a stage of manufacturing the decorated article 400. The durable layer 230 of this mode can reduce a damage to the image 50 formed on the image forming layer 10 at the stage of manufacturing the decorated article 400. The durable layer 230 of this mode can suppress unintentional separation between the image forming layer 10 and the durable layer 230 and unintentional separation between the bonding layer 200 and the durable layer 230, for example, at the stage of manufacturing the decorated article 400.

An example durable layer 230 has a stacked structure, and at least one layer is the first layer X that satisfies the following relational expression (1). In the case where the durable layer 230 has the stacked structure, it is preferable that a layer located at a position closest to the bonding layer 200 be the first layer X. An example durable layer 230 has the stacked structure, and all layers forming the durable layer 230 are the first layers X. An example durable layer 230 is in contact with the bonding layer 200. In an example durable layer 230, the first layer X is in contact with the bonding layer 200.

$$\text{Glass transition temperature (Tg) of main component}$$
$$\text{of bonding layer} < \text{glass transition temperature (Tg) of}$$
$$\text{main component of first layer X ... (relational}$$
$$\text{expression (1))}.$$

In this embodiment, the main component means a component having the largest content among components contained in the bonding layer 200. The same applies for the main component of the durable layer 230. An example first layer X contains a component having a glass transition temperature (Tg) of 50°C or above, preferably 60°C or above, as a main component.

The durable layer 230 of the preferred mode includes a layer containing an ultraviolet absorber. The durable layer 230 of this mode can achieve excellent light resistance of the image 50 of the manufactured decorated article 400. The durable layer 230 of this mode is suitably used when the image 50 formed on the image forming layer 10 is an image formed by the sublimation type thermal transfer system. The durable layer 230 of a more preferred mode has a stacked structure including the first layer X and a layer containing an ultraviolet absorber. The durable layer 230 of the more preferred mode has a single-layer structure or a stacked structure that includes the first layer X containing an ultraviolet absorber.

Examples of the ultraviolet absorber include a benzophenone-based ultraviolet absorber, a benzotriazole-based ultraviolet absorber, a benzoate-based ultraviolet absorber, a triazine-based ultraviolet absorber, a salicylate-based ultraviolet absorber, or the like.

It is preferable that the thickness of the durable layer 230 be 0.01 $\mu$m or more and 5 $\mu$m or less.

Examples of a method for forming the durable layer 230 include (i) a method where a sheet or the like forming the durable layer 230 is laminated to the image forming layer 10, (ii) a method where the durable layer 230 is formed on the image forming layer 10 by transfer, (iii) a method where the durable layer 230 is formed by applying a coating liquid containing the above-mentioned components and the like on the image forming layer 10 and by drying the coating liquid, or the like. For example, by using the transfer sheet, where the durable layer 230 capable of being peeled off from the base material 260 is provided on the base material 260 of the transfer sheet as shown in FIG. 16C and FIG. 16E, the durable layer 230 can be formed by transfer. Further, by transferring the transfer layer 240 to the image forming layer 10 side of the recording medium 100 by using the transfer sheet 250, where the bonding layer 200 and the transfer layer 240 including the durable layer 230 are provided on the base material 260 of the transfer sheet as shown in FIG.

16D, it is possible to achieve the decorative sheet 150 where the durable layer 230 and the bonding layer 200 are provided in this order from the image forming layer 10 side.

Examples of the decorative sheet 150 of the present disclosure include the recording medium 100 of the present disclosure and a sheet where an image is formed on the image forming layer 10 of the recording medium 100 of the present disclosure.

An example decorative sheet 150 of the present disclosure includes the support body 1, the image forming layer 10, and an image top layer, and either one or both of the support body 1 and the image top layer includes one or a plurality of glossiness adjusting layers. Examples of the image top layer include the durable layer 230, the bonding layer 200, or the like. The image top layer may also be a layer other than the durable layer 230 and the bonding layer 200. An example decorative sheet 150 of the present disclosure includes the durable layer 230 and the bonding layer 200, and either one or both of the durable layer 230 and the bonding layer 200 is the glossiness adjusting layer. An example durable layer 230 or an example bonding layer 200 is formed of a void layer or an uneven layer.

An example decorative sheet 150 of the present disclosure includes the functional layer. An example decorative sheet 150 of the present disclosure includes the functional layer located on the outermost surface. For the functional layer, the layer described with respect to the recording medium 100 of the present disclosure may be suitably selected and used. An example functional layer is located on the bonding layer. An example functional layer is located on the durable layer. An example functional layer is located between the support body 1 and the image forming layer 10. An example functional layer is located on the side of the support body 1 opposite to the image forming layer 10. An example support body 1 includes the functional layer. An example decorative sheet 150 of the present disclosure includes a plurality of functional layers.

<<Separation-member-equipped decorative sheet>>

Next, a separation-member-equipped decorative sheet according to the embodiment of the present disclosure (hereinafter referred to as "separation-member-equipped decorative sheet of the present disclosure") will be described. In a separation-member-equipped decorative sheet 150X of the present disclosure, the separation member 60 is provided to the support body 1 side of the decorative sheet 150 (see FIG. 7, FIG. 8B, FIG. 9B). The separation member 60 can be separated from the decorative sheet 150. The separation member 60 may be a separation member that can be separated from the decorative sheet 150 with the application of heat energy, or may be a separation member that can be separated from the decorative sheet 150 without the application of heat energy.

For the decorative sheet 150 forming the separation-member-equipped decorative sheet 150X of the present disclosure, the decorative sheet 150 of the present disclosure described above may be used without any change. For the separation member, the separation member 60 described with respect to the separation-member-equipped recording medium 100X of the present disclosure may be used without any change. Therefore, the detailed description of the decorative sheet 150 and the separation member 60 will be omitted in this embodiment.

FIG. 7, FIG. 8B, and FIG. 9B are schematic cross-sectional views each showing one example of the separation-member-equipped decorative sheet 150X of the present disclosure. The separation-member-equipped decorative sheet 150X of the mode shown in each drawing is a sheet where the image 50 is formed on the image forming layer 10 of the above-mentioned separation-member-equipped recording medium 100X of the present disclosure. In the mode shown in each drawing, the image 50 is formed on the image forming layer 10. However, the image forming layer 10 where the image 50 is not yet formed may be used.

The separation-member-equipped decorative sheet 150X of the present disclosure has excellent handleability. Further, the decorative sheet 150 can be integrated with the decoration target 300 by using any of various transfer systems while or after separating the separation member 60.

<<Decorated article>>

Next, a decorated article according to the embodiment of the present disclosure (hereinafter referred to as "decorated article of the present disclosure") will be described. The decorated article 400 of the present disclosure is obtained by integrating the decorative sheet 150 with the decoration target 300 as shown in FIG. 10A and FIG. 10B.

For the decorative sheet 150 forming the decorated article 400 of the present disclosure, the decorative sheet 150 of the present disclosure may be suitably selected and used and hence, the detailed description is omitted in this embodiment.

In the decorated article 400 of the mode shown in FIG. 10A, the decorative sheet includes the bonding layer 200, and the decorative sheet 150 is integrated with the decoration target 300 on the image forming layer 10 side of the decorative sheet 150. In the decorated article 400 of the mode shown in FIG. 10B, the decorative sheet 150 is integrated with the decoration target 300 on the support body 1 side of the decorative sheet 150. The decorated article 400 of the present disclosure includes the decorative sheet 150 of the present disclosure, thus allowing novel design properties to be added to the decorated article 400. It is preferable that the decorative sheet 150 of the decorated article 400 of the mode shown in FIG. 10A be a decorative sheet 150 having glossiness measured from the support body 1 side being 60 or less. It is preferable that the decorative sheet 150 of the decorated article 400 of the mode shown in FIG. 10B be a decorative sheet 150 having glossiness measured from the image forming layer 10 side being 60 or less.

(Decoration target)

The shape, the size, the material, and the like of the decoration target 300 are not limited. Examples of the decoration target 300 include plain paper, woodfree paper, tracing paper, wood, a resin plate (or a film) made of polycarbonate, an acrylic resin, an acrylonitrile butadiene styrene (ABS) resin, polyvinyl chloride, or the like, a metal plate made of aluminum, or the like, a glass plate, and a ceramic plate, such as a pottery, or the like. The decoration target 300 may be formed by stacking a plurality of members with each other. The decoration target 300 may include a predetermined image. The whole or a part of the decoration target 300 may have curvature, an uneven structure, or the like.

An example decoration target 300 has transparency. The decoration target 300 of this mode allows an image formed on the image forming layer 10 of the decorative sheet 150 to be viewed when the decorated article 400 of the present disclosure is observed from the decoration target 300 side. The decoration target 300 may partially have transparency. Transparency includes colorless transparency, translucency, and colored transparency. The decorated article 400 of the present disclosure includes the decorative sheet 150 of the present disclosure, thus allowing the image formed on the image forming layer 10 to be viewed from the decorative sheet 150 side. An example decorative sheet 150 of the present disclosure includes the glossiness adjusting layer and the like. In the decorated article 400 including the decorative sheet 150 of this mode, the image 50 formed on the image forming layer 10 can achieve more novel design properties.

<<Method for manufacturing decorated article>>

Next, a method for manufacturing a decorated article according to the embodiment of the present disclosure (hereinafter referred to as "method for manufacturing a decorated article of the present disclosure") will be described.

<Method for manufacturing decorated article of first embodiment>

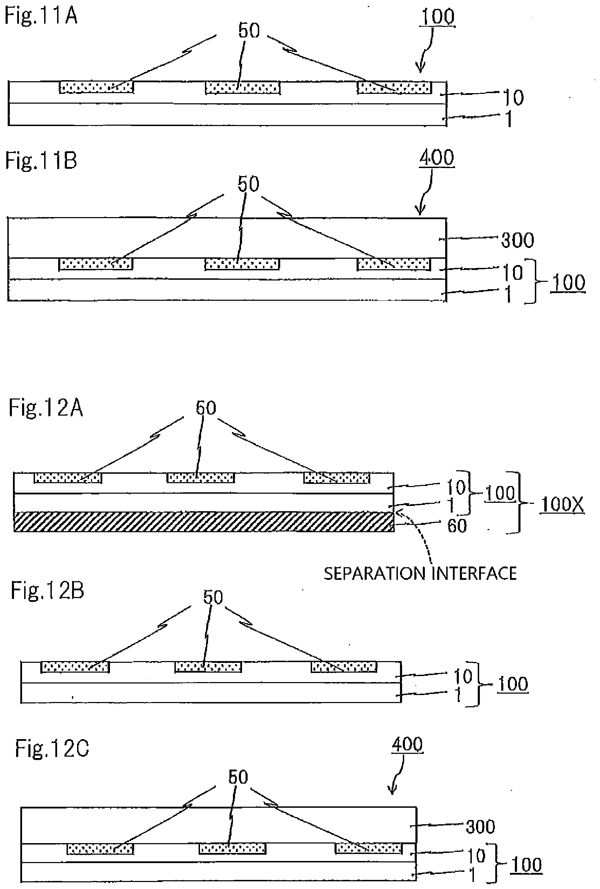

A method for manufacturing a decorated article of a first embodiment of the present disclosure includes an image forming step and an integration step. The image forming step is a step of forming an image on an image forming layer 10 of a recording medium 100 (see FIG. 11A). The integration step is a step of integrating the recording medium 100 with a decoration target 300 after the image forming step (see FIG. 11B). FIG. 11 is a process diagram showing one example of the method for manufacturing a decorated article of the present disclosure.

For the recording medium 100 used for the method for manufacturing a decorated article of the first embodiment of the present disclosure, it is sufficient to suitably select and use the recording medium 100 of the present disclosure described above. Further, for the decoration target 300, it is sufficient to suitably select and use the decoration target 300 described with respect to the decorated article 400 of the present disclosure.

(Image forming step)

The image forming step is not limited, and it is sufficient to suitably select and perform any of various methods for forming an image described with respect to the above-mentioned recording medium 100 of the present disclosure. In the method for manufacturing a decorated article of a preferred mode, an image is formed by the sublimation type thermal transfer system or the melt type thermal transfer system. The same applies for a method for manufacturing a decorated article of a second embodiment and a third embodiment, which will be described later. The recording medium 100 and the separation-member-equipped recording medium 100X of the mode shown in FIG. 12 to FIG. 15, where an image is formed on the image forming layer 10, correspond to the decorative sheet 150 of the present disclosure on which an image is formed and the separation-member-equipped decorative sheet 150X of the present disclosure on which an image is formed.

(Integration step)

The integration step is a step of integrating the recording medium 100 subjected to the image forming step with the decoration target 300. In the mode shown in FIG. 11B, the recording medium 100 is integrated with the decoration target 300 on the image forming layer 10 side of the recording medium 100. The recording medium 100 may be integrated with the decoration target 300 on the support body 1 side of the recording medium 100. In the case where the recording medium 100 is integrated with the decoration target 300 on the image forming layer 10 side of the recording medium 100, the manufactured decorated article 400 has a stacked structure where the decoration target 300, the image forming layer, and the support body 1 are stacked in this order and hence, an image formed on the image forming layer 10 can be protected by the support body 1. In this case, it is preferable to use the recording medium 100 (the decorative sheet 150) that allows the glossiness adjusting layer to be located on the surface of the manufactured decorated article 400.

In the case where the recording medium 100 used for the method for manufacturing a decorated article of the present disclosure is a recording medium having glossiness measured from the support body 1 side being 60 or less, it is preferable that the recording medium 100 be integrated with the decorative sheet 300 on the image forming layer 10 side. In the case where the recording medium 100 used for the method for manufacturing a decorated article of the present disclosure is a recording medium having glossiness measured from the image forming layer 10 side being 60 or less, it is preferable that the recording medium 100 be integrated with the decorative sheet 300 on the support body 1 side. The same applies for a method for manufacturing a decorated article of any of the various modes.

(Lamination step)

The method for manufacturing a decorated article of the first embodiment of the present disclosure may include a lamination step of laminating a bonding layer to the side of the recording medium 100 close to the decoration target 300. It is sufficient to perform the lamination step before the integration step. In the case where the bonding layer 200 is laminated to the image forming layer 10 side of the recording medium 100, it is sufficient to perform the lamination step between an image forming layer forming step and the integration step. In the case where the bonding layer 200 is laminated to the support body side of the recording medium 100, the lamination step may be performed before the image forming step. By taking into account the image forming step, it is preferable to perform the lamination step after the image forming step.

The bonding layer 200 may be laminated to the decoration target 300. The decoration target 300 to which the bonding layer is provided in advance may be used. In the method for manufacturing a decorated article shown in the respective drawings, the illustration of the bonding layer 200 is omitted.

For the bonding layer 200, it is sufficient to suitably select and use the bonding layer 200 described with respect to the above-mentioned decorative sheet of the present disclosure. The bonding layer 200 may be laminated by pressing a bonding film, a bonding sheet, or the like, or may be laminated by transfer by using the transfer sheet or the like that can transfer a bonding layer. The bonding layer may be laminated by applying and drying a coating liquid containing bonding components.

A masking-member-equipped bonding layer 200A may be used as the bonding layer 200. In the case where the masking-member-equipped bonding layer A is used, the integration step is performed after the masking member is peeled off. A masking-member-equipped bonding layer where the masking member is provided to each of both surfaces may be used as the bonding layer. In this case, it is sufficient to perform the lamination step by peeling off the masking member on one surface and, thereafter, perform the integration step by peeling off the masking member on the other surface.

<Method for manufacturing decorated article of second embodiment>

A method for manufacturing a decorated article of the second embodiment of the present disclosure includes the image forming step, a separation step, and the integration step. The image forming step is a step of forming an image on the image forming layer 10 of the separation-member-equipped recording medium 100X (see FIG. 12A). The separation step is a step of separating the separation member 60 from the separation-member-equipped recording medium 100X after the image forming step (see FIG. 12B). The integration step is a step of integrating the recording medium 100, which is obtained by separating the separation member 60, with the decoration target 300 after the separation step (see FIG. 12C). FIG. 12 is a process diagram showing one example of the method for manufacturing a decorated article of the present disclosure.

(Separation step)

The separation step is a step of separating the separation member 60 from the separation-member-equipped recording medium 100X. By performing this step, it is possible to obtain a configuration equivalent to the configuration of the recording medium 100 described with respect to the method for manufacturing a decorated article of the first embodiment. As described above, this separation may be performed with the application of heat energy or may be performed without the application of heat energy.

For the integration step, the method or the like described with respect to the above-mentioned method for manufacturing a decorated article of the first embodiment may be suitably selected and used. The recording medium 100 may be integrated with the decoration target 300 on the image forming layer 10 side of the recording medium 100 from which the separation member 60 is separated (see FIG. 12C), or may be integrated with the decoration target 300 on the support body 1 side. In the case where an adhesive layer or the like is located on the surface of the support body 1 of the recording medium 100 from which the separation member 60 is separated, the recording medium 100, from which the separation member 60 is separated, can be integrated with the decoration target 300 by using the adhesive layer. In this case, the lamination step of laminating the bonding layer is not particularly required. In this case, the recording medium 100 can be integrated with the decoration target 300 on the support body 1 side of the recording medium 100.

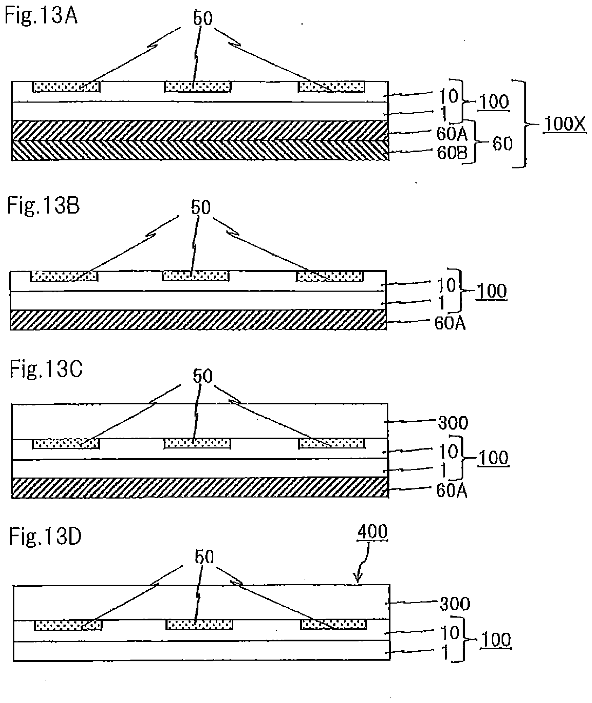

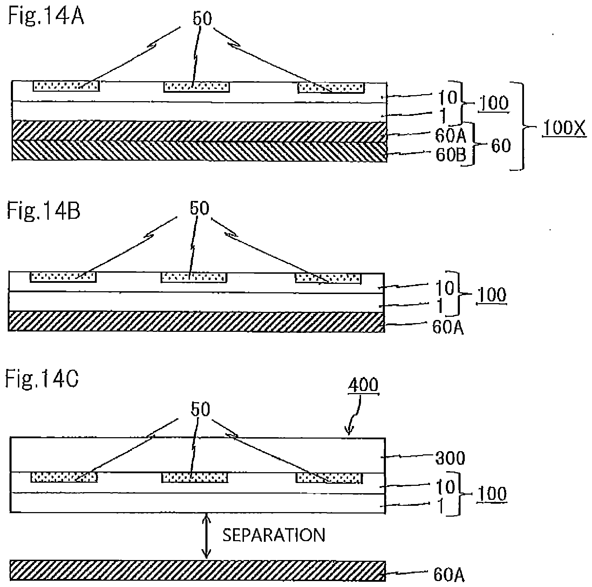

The separation member 60 is configured to be separated in a stepwise manner (60A, 60B) as shown in FIG. 13A, and one portion (60B) of the separation member 60 is separated from the separation-member-equipped recording medium 100X in the separation step as shown in FIG. 13B. Next, as shown in FIG. 13C, the integration step is performed. Next, as shown in FIG. 13D, the other portion (60A) of the separation member 60 remaining on the recording medium 100 may be separated from the recording medium 100, which is integrated with the decoration target 300. The separation member 60 is configured to be separated in a stepwise manner (60A, 60B) as shown in FIG. 14A, and one portion (60B) of the separation member 60 is separated from the separation-member-equipped recording medium 100X in the separation step as shown in FIG. 14B. Next, as shown in FIG. 14C, an integration step may be performed where while the recording medium 100 is separated (peeled off) from the other portion (60A) of the separation member 60 remaining on the recording medium 100, the recording medium 100 from which all separation members are separated is integrated (brought into close contact) with the decoration target 300 by transfer. The recording medium 100 from which all separation members are separated may be integrated with the decoration target 300 after the other portion (60A) of the separation member 60 is separate.

<Method for manufacturing decorated article of third embodiment>

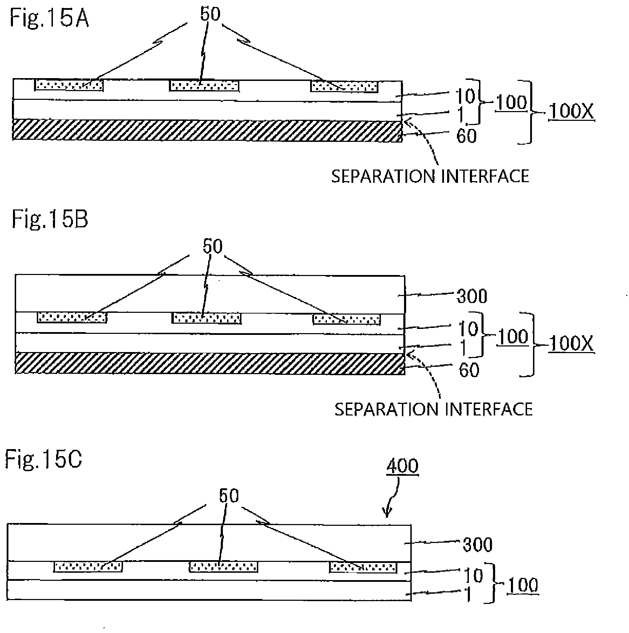

A method for manufacturing a decorated article of the third embodiment of the present disclosure includes the image forming step of forming an image on the image forming layer 10 of the separation-member-equipped recording medium 100X as shown in FIG. 15A, a step of integrating the separation-member-equipped recording medium 100X with the decoration target 300 on the image forming layer 10 side of the separation-member-equipped recording medium 100X as shown in FIG. 15B after the image forming step, and a step of separating the separation member 60 from the separation-member-equipped recording medium 100X, which is integrated with the decoration target 300, as shown in FIG. 15C after the integration step.

The method for manufacturing a decorated article of the third embodiment of the present disclosure differs from the above-mentioned method for manufacturing a decorated article of the second embodiment of the present disclosure with respect to a point that the order of the separation step and the integration step is switched, and a point that the integration step is limited to be performed on the image forming layer 10 side of a separation-member-equipped recording medium 100.

(Durable layer forming step)

In the case where the bonding layer is laminated or transferred to the image forming layer 10 side of the recording medium 100 in the above-mentioned manufacturing methods of the first embodiment to the third embodiment, it is preferable that the method include a durable layer forming step of forming a durable layer on the image forming layer 10 of the recording medium 100 before the bonding layer is laminated or transferred. Also in the case where the bonding layer 200 is laminated or transferred to the decoration target 300 and the recording medium 100 is integrated with the decoration target 300 on the image forming layer 10 side of the recording medium 100, it is preferable that the method include the durable layer forming step of forming the durable layer on the image forming layer 10 of the recording medium 100 before the integration step. The manufacturing method of the present disclosure including the durable layer forming step can suppress the occurrence of blurring of an image formed on the image forming layer 10 of the recording medium 100 caused due to shifting of the components of the image to the bonding layer 200.

Also in the case where the recording medium 100 is integrated with the decoration target 300 on the support body 1 side of the recording medium 100, it is preferable that the method include the durable layer forming step of forming the durable layer 230 on the image forming layer 10. With the manufacturing method including such a step, it is possible to allow the decorated article 400 manufactured by integrating the recording medium 100 with the decoration target 300 on the support body 1 side of the recording medium 100 to have a configuration where the support body 1, the image forming layer 10, and the durable layer 230 are provided in this order from the decoration target 300 side and hence, an image on the image forming layer 10 can be protected by the durable layer.

For the durable layer, the durable layer 230 described with respect to the above-mentioned decorative sheet 150 of the present disclosure may be suitably selected and used.

<Method for manufacturing decorated article of fourth embodiment>

A method for manufacturing a decorated article of a fourth embodiment includes a step of integrating the decorative sheet 150 with the decoration target 300. The method for manufacturing a decorated article of the fourth embodiment uses the decorative sheet 150 or the separation-member-equipped decorative sheet 150X of the present disclosure.

Each method for manufacturing a decorated article of the present disclosure may include, after the integration step, a functional layer forming step of forming various functional layers on the side opposite to the decoration target 300. In the case where the separation-member-equipped recording medium 100 or the separation-member-equipped decorative sheet 150X is used, it is sufficient to perform the functional layer forming step after the separation step of separating the separation member 60 and the integration step.

The method for manufacturing a decorated article of the present disclosure including the functional layer forming step can provide an additional function to a decorated article by means of the functional layer. For the functional layer, the functional layer described with respect to the recording medium 100 of the present disclosure may be suitably selected and used. In an example functional layer forming step, at least one of a sensitive layer, a fingerprint resistant layer, an antistatic layer, a void layer, or an uneven layer is formed on the decorative sheet 150 on the side opposite to the decoration target 300. It is preferable to form the uneven film on the decorative sheet 150 on the side opposite to the decoration target 300.

For example, the functional layer can be formed by lamination or the like that uses the bonding layer 200 or the like described above. The functional layer may be formed by transfer. The functional layer may be formed by applying and drying a coating liquid.

<Method for manufacturing decorated article according to another embodiment>

A method for manufacturing a decorated article according to another embodiment of the present disclosure includes the integration step of integrating the decorative sheet with a decoration target and the functional layer forming step of forming the functional layer on a surface of the decorative sheet on the side opposite to the decoration target after the integration step. The functional layer forming step is a step of forming the functional layer such that light transmittance in the visible light region of the whole of a stacked body formed of the decorative sheet and the functional layer is 10% or more and a value of glossiness of the stacked body which is measured with the condition of the measurement angle being 45° is 60 or less. The decorative sheet includes the support body and an image layer. The image layer is the image forming layer 10 on which an image is formed, or is a layer on which an image is formed in advance.

In the method for manufacturing a decorated article according to another embodiment of the present disclosure, there is no limitation on light transmittance in the visible light region of the whole of the decorative sheet 150 and the glossiness of a decorated article. The method for manufacturing a decorated article according to another embodiment of the present disclosure differs from the above-mentioned method for manufacturing a decorated article of the present disclosure with respect to a point that the functional layer is formed after the integration step such that light transmittance in the visible light region of the whole of the stacked body formed of the decorative sheet and the functional layer is 10% or more and glossiness of the stacked body which is measured with the condition of the measurement angle being 45° is 60 or less.

For the decorative sheet used for the method for manufacturing a decorated article according to another embodiment of the present disclosure, it is sufficient to use a decorative sheet having light transmittance that can set the light transmittance in the visible light region of the whole of the stacked body, which is formed of the decorative sheet and the functional layer, to 10% or more. For the functional layer, it is sufficient to suitably select and use the functional layer or the glossiness adjusting layer described with respect to the above-mentioned recording medium 100 or the like of the present disclosure. In the case where the recording medium 100 of the present disclosure is used, it is sufficient to use the functional layer that can satisfy the above-mentioned specification of light transmittance in the visible light region and glossiness of the stacked body. For example, it is sufficient to use the functional layer or the like having transparency.

(Cutting step)

The method for manufacturing a decorated article of any of the various embodiments of the present disclosure may include, after the integration step, a cutting step of cutting the stacked body formed of the decorative sheet 150 and the decoration target 300 in the thickness direction.

By performing the cutting step after the integration step, it is possible to manufacture a decorated article where end surfaces of the decorative sheet 150 and the decoration target 300 are aligned.

In the case where a manufacturing process for a decorated article of any of the various embodiments includes the functional layer forming step, the cutting step may be performed before the functional layer forming step or may be performed after the functional layer forming step. In the case where the cutting step is performed after the functional layer forming step, it is possible to manufacture a decorative sheet where end surfaces of the decorative sheet 150, the decoration target 300, and the functional layer are aligned. Therefore, such a configuration is preferable.

Either one or both of the decorative sheet 150 and the decoration target 300 may be cut before the integration step.

In the case where the manufacturing process for a decorated article of any of the various embodiments includes the separation step and this separation step is performed after the integration step, the cutting step may be performed before the separation step or may be performed after the separation step.

A cutting method is not limited, and examples of the cutting method include cutting with a cutting blade, a laser cutter, or the like. A cutting method other than the above-mentioned cutting may be adopted. Cutting with a laser cutter can suppress the generation of burrs and shavings when the decorative sheet 150 and the decoration target 300 are cut. Therefore, such cutting is preferable.

<<Combination of recording medium and transfer sheet>>

Next, a combination of the recording medium and the transfer sheet according to the embodiment of the present disclosure (hereinafter referred to as "combination of the present disclosure") will be described.

The combination of the present disclosure is a combination of the support body, the recording medium including the image forming layer provided on the support body, the base material, and the transfer sheet including the transfer layer provided such that the transfer layer is capable of being peeled off from the base material. The combination of the present disclosure allows the manufacture of a transfer article, where light transmittance in the visible light region is 10% or more and glossiness measured with the condition of the measurement angle being 45° is 60 or less, by transferring the transfer layer of the transfer sheet onto the recording medium.

The combination of the present disclosure allows the manufacture of a printed object, a decorative sheet or the like having novel design properties.

A recording medium used for the combination of the present disclosure is not limited. For example, the above-mentioned recording medium 100 of the present disclosure may be used without any change. A recording medium where an image is formed on the image forming layer may also be used. The light transmittance in the visible light region of the whole of the recording medium used for the combination of the present disclosure and the glossiness of the recording medium are not limited. It is sufficient that the recording medium can set the light transmittance in the visible light region of the whole of the transfer article manufactured with the combination of the present disclosure to 10% or more and can set glossiness measured with the condition of the measurement angle being 45° to 60 or less. The same applies for the transfer sheet including the transfer layer. For example, the recording medium forming the combination of the present disclosure may not include the above-mentioned glossiness adjusting layer which is described with respect to the recording medium 100 of the present disclosure. In this case, it is sufficient that a transfer layer including the glossiness adjusting layer be used as the transfer layer of the transfer sheet.

In an example combination of the present disclosure, the recording medium includes the glossiness adjusting layer or the transfer layer of the transfer sheet includes the glossiness adjusting layer. Alternatively, each of both the support body of the recording medium and the transfer layer of the transfer sheet includes the glossiness adjusting layer. In an example combination of the present disclosure, the transfer layer of the transfer sheet includes the durable layer 230 described with respect to the above-mentioned recording medium 100 of the present disclosure, and this durable layer 230 is the glossiness adjusting layer. An example transfer layer includes the durable layer 230 including voids or the durable layer 230 with a surface having an uneven shape. In the case where the transfer layer of the transfer sheet has a stacked structure including the glossiness adjusting layer, it is preferable to use a transfer sheet that allows the glossiness adjusting layer to be located on the outermost surface after the transfer. Specifically, it is preferable that the transfer layer of the transfer sheet include the glossiness adjusting layer located at a position closest to the base material of the transfer sheet. The transfer layer may have a single-layer structure or may have a stacked structure.

In an example transfer sheet, a durable layer capable of being peeled off from the base material is provided on the base material. The transfer sheet of this mode can protect the image forming layer of the recording medium by the durable layer when the transfer layer is transferred to the image forming layer side of the recording medium. In an example transfer sheet, the transfer layer is provided on the base material. This transfer layer includes the bonding layer, which is located closest to the base material, and the durable layer. The transfer sheet of this mode can protect the image forming layer, and can be integrated with a decoration target or the like with the bonding layer located on the surface of a transfer article. In these modes, the durable layer may be used as the glossiness adjusting layer. Alternatively, a configuration may be adopted where a transfer layer including a layer other than the durable layer is used, and the layer other than the durable layer is used as the glossiness adjusting layer. For example, a transfer sheet of the mode shown in FIG. 16C, FIG. 16D, or FIG. 16E may be used as the transfer sheet. Further, in the transfer sheet 250 of the mode shown in FIG. 16C, FIG. 16D, or FIG. 16E, a release layer or the like may be provided between the base material 260 and the durable layer 230, between the base material 260 and the bonding layer 200 or between the base material 260 and the transfer layer 240. The release layer is a layer that remains on the base material 260 when these layers are transferred. In the modes shown in FIG. 16C and FIG. 16E, the peeling layer may be provided between the base material 260 and the durable layer 230 so as to form a transfer layer including the peeling layer and the durable layer. In this case, the peeling layer may be used as the glossiness adjusting layer. For the release layer or the peeling layer, a layer conventionally known in the field of transfer sheets may be suitably selected and used.

The preferred combination of the present disclosure can set the light transmittance in the visible light region of the whole of the transfer article, which is obtained by transferring the transfer layer of the transfer sheet to the image forming layer side of the recording medium, to 10% or more and 80% or less. The preferred combination of the present disclosure can also set the glossiness of the transfer article which is measured from the transfer layer side with the condition of the measurement angle being 45° to 60% or less.

The recording medium of one embodiment of the present disclosure is a recording medium which is used for forming an image, and includes the support body, and the image forming layer provided on the support body, wherein the light transmittance in the visible light region of the whole of the recording medium is 10% or more, and the glossiness of the recording medium which is measured with the condition of the measurement angle being 45° is 60 or less.

In the recording medium of one embodiment of the present disclosure, the support body includes the uneven layer with the surface having the uneven structure or the void layer having voids therein, or the uneven layer or the void layer is located between the support body and the image forming layer.

In the release member-equipped recording medium of one embodiment of the present disclosure, the separation member capable of being separated from the recording medium is provided to the support body side of the recording medium of any of the various embodiments of the present disclosure.

In the release member-equipped recording medium of one embodiment of the present disclosure, the separation member is capable of being separated from the recording medium with application of heat energy.

The decorative sheet of one embodiment of the present disclosure includes the support body, and the image forming layer provided on the support body, wherein the light transmittance in the visible light region of the whole of the decorative sheet is 10% or more, and the glossiness of the decorative sheet which is measured with the condition of the measurement angle being 45° is 60 or less.

The decorative sheet of one embodiment of the present disclosure may satisfy one or a plurality of the following (1) to (14). In the case where the decorative sheet of one embodiment of the present disclosure satisfies the plurality of the following (1) to (14), any combination may be adopted.

(1) The support body includes the uneven layer with the surface having the uneven structure or the void layer having voids therein.
(2) The uneven layer or the void layer is located between the support body and the image forming layer.
(3) An image is formed on the image forming layer.
(4) The image is a thermal transfer image.
(5) The image is an image formed by an inkjet printing system or a toner printing system.
(6) The bonding layer is provided on the image forming layer.
(7) The masking member capable of being peeled off from the bonding layer is provided on the bonding layer, and the light transmittance and the glossiness are light transmittance and glossiness measured after the masking member is peeled off.
(8) The durable layer is provided between the image forming layer and the bonding layer.
The durable layer has the single-layer structure or the stacked structure including the first layer, and the glass transition temperature (Tg) of a main component contained in the first layer is higher than the glass transition temperature (Tg) of a main component contained in the bonding layer.
(9) The first layer is in contact with the bonding layer.
(10) The durable layer has the stacked structure including the first layer, and the first layer is located at a position closest to the bonding layer.
(11) The durable layer is provided on the image forming layer.
(12) The durable layer contains an ultraviolet absorber.
(13) The first layer contains an ultraviolet absorber.
(14) The decorative sheet includes the functional layer located on the outermost surface.

In the separation-member-equipped decorative sheet of one embodiment of the present disclosure, the separation member capable of being separated from the decorative sheet of any of the various embodiments of the present disclosure is provided to the support body side of the decorative sheet.

In the separation-member-equipped decorative sheet of one embodiment of the present disclosure, the separation member is capable of being separated from the decorative sheet with application of heat energy.

In the decorated article of one embodiment of the present disclosure, the decorative sheet of any of the various embodiments of the present disclosure is integrated with a decoration target.

The decorated article of one embodiment of the present disclosure satisfies either one or both of the following (15) and (16).

(15) The functional layer is provided to the decorative sheet on the side opposite to the decoration target. For the functional layer, the functional layer of the present disclosure may be suitably selected and used.

(16) The bonding layer is provided between the decorative sheet and the functional layer.

The method for manufacturing a decorated article of one embodiment of the present disclosure includes the image forming step of forming an image on the image forming layer of the recording medium of any of the various embodiments of the present disclosure, and the integration step of integrating the recording medium with a decoration target after the image forming step.

The method for manufacturing a decorated article of one embodiment of the present disclosure satisfies either one or both of the following (17) and (18).

(17) The method includes the lamination step of laminating the bonding layer to the recording medium subjected to the image forming step or to the decoration target, and the integration step is performed by using the bonding layer.

(18) The recording medium is integrated with the decoration target on the image forming layer side.

The method for manufacturing a decorated article of one embodiment of the present disclosure includes the image forming step of forming an image on the image forming layer of the separation-member-equipped recording medium of any of the various embodiments of the present disclosure; the separation step of separating the separation member after the image forming step; and the integration step of integrating the recording medium with a decoration target after the separation step.

The method for manufacturing a decorated article of one embodiment of the present disclosure satisfies either one or both of the following (19) and (20).

(19) The method includes the lamination step of laminating the bonding layer to any one of the image forming layer side of the separation-member-equipped recording medium subjected to the image forming step, the image forming layer side of the recording medium subjected to the separation step, or the decoration target, and the integration step is performed by using the bonding layer.

(20) The recording medium is integrated with the decoration target on the image forming layer side.

The method for manufacturing a decorated article of one embodiment of the present disclosure includes: the image forming step of forming an image on the image forming layer of the separation-member-equipped recording medium of any of the various embodiments of the present disclosure; the integration step of integrating the separation-member-equipped recording medium with a decoration target after the image forming step; and the separation step of separating the separation member after the integration step.

The method for manufacturing a decorated article of one embodiment of the present disclosure satisfies either one or both of the following (21) and (22).

(21) The method includes the lamination step of laminating the bonding layer to either the image forming layer side of the separation-member-equipped recording medium subjected to the image forming step or the decoration target, and the integration step is performed by using the bonding layer.

(22) The separation-member-equipped recording medium is integrated with the decoration target on the image forming layer side.

The method for manufacturing a decorated article of one embodiment of the present disclosure includes: the integration step of integrating the decorative sheet with a decoration target; and the functional layer forming step of forming the functional layer on the surface of the decorative sheet on the side opposite to the decoration target after the integration step, wherein the decorative sheet includes the support body and the image layer, and the functional layer forming step is a step of forming the functional layer such that the light transmittance in the visible light region of the whole of the stacked body formed of the decorative sheet and the functional layer is 10% or more and the glossiness of the stacked body which is measured with the condition of the measurement angle being 45° is 60 or less.

For the functional layer, the functional layer of the present disclosure may be suitably selected and used.

In the combination of the recording medium and the transfer sheet of one embodiment of the present disclosure, the recording medium includes the support body and the image layer, the transfer sheet includes the base material and the transfer layer capable of being peeled off from the base material, and the transfer article is obtained by transferring the transfer layer of the transfer sheet onto the recording medium, the transfer article having the light transmittance in the visible light region being 10% or more and glossiness measured with the condition of the measurement angle being 45° being 60 or less.

In the combination of the recording medium and the transfer sheet of one embodiment of the present disclosure, the transfer layer of the transfer sheet includes the uneven layer with the surface having the uneven structure or the void layer having voids therein.

Reference Signs List

| | |
|---|---|
| 1 | support body |
| 1A, 1B | support body component |
| 1C | separation member base material |
| 3 | primer layer |
| 6 | separation assisting layer |
| 10 | image forming layer |
| 50 | image |
| 60 | separation member |
| 100 | recording medium |
| 100X | separation-member-equipped recording medium |
| 150 | decorative sheet |
| 150X | separation-member-equipped decorative sheet |
| 200 | bonding layer |
| 200A | masking-member-equipped bonding layer |
| 210 | masking member |
| 230 | durable layer |
| 240 | transfer layer |
| 250 | transfer sheet |
| 260 | base material of transfer sheet |
| 300 | decoration target |
| 400 | decorated article |

**Claims**

1. A recording medium which is used for forming an image, the recording medium comprising:

a support body; and an image forming layer provided on the support body, wherein
light transmittance in a visible light region of a whole of the recording medium is 10% or more, and
glossiness of the recording medium which is measured with a condition of a measurement angle being 45° is
60 or less.

2. The recording medium according to claim 1, wherein

the support body includes an uneven layer with a surface having an uneven structure or a void layer having a
void therein, or
the uneven layer or the void layer is located between the support body and the image forming layer.

3. A separation-member-equipped recording medium, wherein a separation member capable of being separated from
the recording medium is provided to a support body side of the recording medium according to claim 1 or 2.

4. The separation-member-equipped recording medium according to claim 3, wherein the separation member is capable of being separated from the recording medium with application of heat energy.

5. A decorative sheet comprising:

a support body; and an image forming layer provided on the support body, wherein
light transmittance in a visible light region of a whole of the decorative sheet is 10% or more, and
glossiness of the decorative sheet which is measured with a condition of a measurement angle being 45° is 60
or less.

6. The decorative sheet according to claim 5, wherein

the support body includes an uneven layer with a surface having an uneven structure or a void layer having a void therein, or
the uneven layer or the void layer is located between the support body and the image forming layer.

7. The decorative sheet according to claim 5 or 6, wherein an image is formed on the image forming layer.

8. The decorative sheet according to claim 7, wherein the image is a thermal transfer image.

9. The decorative sheet according to claim 7, wherein the image is an image formed by an inkjet printing system or a toner printing system.

10. The decorative sheet according to any one of claims 7 to 9, wherein a bonding layer is provided on the image forming layer.

11. The decorative sheet according to claim 10, wherein a masking member capable of being peeled off from the bonding layer is provided on the bonding layer, and the light transmittance and the glossiness are light transmittance and glossiness measured after the masking member is peeled off.

12. The decorative sheet according to claim 10 or 11, wherein a durable layer is provided between the image forming layer and the bonding layer.

13. The decorative sheet according to claim 12, wherein the durable layer has a single-layer structure or a stacked structure including a first layer, and
a glass transition temperature (Tg) of a main component contained in the first layer is higher than a glass transition temperature (Tg) of a main component contained in the bonding layer.

14. The decorative sheet according to claim 13, wherein the first layer is in contact with the bonding layer.

15. The decorative sheet according to claim 13, wherein the durable layer has the stacked structure including the first layer, and the first layer is located at a position closest to the bonding layer.

16. The decorative sheet according to any one of claims 7 to 9, wherein a durable layer is provided on the image forming layer.

17. The decorative sheet according to any one of claims 12 to 16, wherein the durable layer contains an ultraviolet absorber.

18. The decorative sheet according to any one of claims 13 to 15, wherein the first layer contains an ultraviolet absorber.

19. The decorative sheet according to any one of claims 5 to 18, comprising a functional layer located on an outermost surface.

20. A separation-member-equipped decorative sheet, wherein a separation member capable of being separated from the decorative sheet according to any one of claims 5 to 19 is provided to a support body side of the decorative sheet.

21. The separation-member-equipped decorative sheet according to claim 20, wherein the separation member is capable of being separated from the decorative sheet with application of heat energy.

22. A decorated article where the decorative sheet according to any one of claims 7 to 19 is integrated with a decoration target.

23. The decorated article according to claim 22, wherein a functional layer is provided to the decorative sheet on a side opposite to the decoration target.

24. The decorated article according to claim 23, wherein a bonding layer is provided between the decorative sheet and the functional layer.

25. A method for manufacturing a decorated article, the method comprising:

forming an image on the image forming layer of the recording medium according to claim 1 or 2; and
integrating the recording medium with a decoration target after the forming.

26. The method for manufacturing a decorated article according to claim 25, wherein the method comprises laminating a bonding layer to the recording medium formed the image or to the decoration target, and the integrating is performed by using the bonding layer.

27. The method for manufacturing a decorated article according to claim 25 or 26, wherein the recording medium is integrated with the decoration target on an image forming layer side.

28. A method for manufacturing a decorated article, the method comprising:

forming an image on the image forming layer of the separation-member-equipped recording medium according to claim 3 or 4;
separating the separation member after the image forming step; and
integrating the recording medium with a decoration target after the separating.

29. The method for manufacturing a decorated article according to claim 28, wherein the method comprises laminating a bonding layer to any one of an image forming layer side of the separation-member-equipped recording medium formed the image, an image forming layer side of the recording medium separated, or the decoration target, and the integrating is performed by using the bonding layer.

30. The method for manufacturing a decorated article according to claim 28 or 29, wherein the recording medium is integrated with the decoration target on the image forming layer side.

31. A method for manufacturing a decorated article, the method comprising:

forming an image on the image forming layer of the separation-member-equipped recording medium according to claim 3 or 4;
integrating the separation-member-equipped recording medium with a decoration target after the forming; and
a separation step of separating the separation member after the integrating.

32. The method for manufacturing a decorated article according to claim 31, wherein the method comprises laminating a bonding layer to either an image forming layer side of the separation-member-equipped recording medium formed the image or the decoration target, and the integrating is performed by using the bonding layer.

33. The method for manufacturing a decorated article according to claim 31 or 32, wherein the separation-member-equipped recording medium is integrated with the decoration target on the image forming layer side.

34. A method for manufacturing a decorated article, the method comprising:

integrating a decorative sheet with a decoration target; and
forming a functional layer on a surface of the decorative sheet on a side opposite to the decoration target after the integrating, wherein
the decorative sheet includes a support body and an image layer, and
the forming is forming a functional layer such that light transmittance in a visible light region of a whole of a stacked body formed of the decorative sheet and the functional layer is 10% or more and glossiness of the stacked body which is measured with a condition of a measurement angle being 45° is 60 or less.

35. A combination of a recording medium and a transfer sheet, wherein

the recording medium includes a support body and an image layer,
the transfer sheet includes a base material and a transfer layer capable of being peeled off from the base material, and
a transfer article is obtained by transferring the transfer layer of the transfer sheet onto the recording medium, the transfer article having light transmittance in a visible light region being 10% or more and glossiness measured with a condition of a measurement angle being 45° being 60 or less.

36. The combination of a recording medium and a transfer sheet according to claim 35, wherein the transfer layer of the transfer sheet includes an uneven layer with a surface having an uneven structure or a void layer having a void therein.

Fig. 1

Fig. 2

Fig.3A

Fig.3B

Fig. 4

100X

10
1
100
60

SEPARATION INTERFACE

Fig. 5

100X

10
1
100

6
1C
60

SEPARATION INTERFACE

Fig.6A

60

150

10
1
100

Fig.6B

60

150

200
10
1
100

Fig.7A

SEPARATION INTERFACE

Fig.7B

SEPARATION INTERFACE

Fig.8A

Fig.8B

SEPARATION INTERFACE

Fig.9A

Fig.9B

SEPARATION INTERFACE

Fig.10A

Fig.10B

Fig.11A

50

100

10

1

Fig.11B

50

400

300

10

1

100

Fig.12A

50

10

1

60

100

100X

SEPARATION INTERFACE

Fig.12B

50

10

1

100

Fig.12C

50

400

300

10

1

100

Fig.13A

Fig.13B

Fig.13C

Fig.13D

Fig.14A

Fig.14B

Fig.14C

SEPARATION

Fig.15A

50

10
1
60

100

100X

SEPARATION INTERFACE

Fig.15B

50

300

10
1
60

100

100X

SEPARATION INTERFACE

Fig.15C

400

50

300

10
1

100

Fig.16A

250

200
260

Fig.16B

250

200
210 } 240
260

Fig.16C

250

230
260

Fig.16D

250

230
200 } 240
260

Fig.16E

250

230    200

260

## INTERNATIONAL SEARCH REPORT

International application No.

PCT/JP2020/030365

### A. CLASSIFICATION OF SUBJECT MATTER

B44C 1/17(2006.01)i; B41M 5/00(2006.01)i; B41M 5/382(2006.01)i; B41M 5/50(2006.01)i; B41M 5/52(2006.01)i; C09J 7/10(2018.01)i; B32B 7/023(2019.01)i
FI:     B41M5/52 400; B32B7/023; B41M5/52 300; B41M5/382 800; B41M5/50 420; B41M5/50 410; B44C1/17 M; B41M5/00 100; B41M5/52 100; B41M5/50 110; C09J7/10

According to International Patent Classification (IPC) or to both national classification and IPC

### B. FIELDS SEARCHED

Minimum documentation searched (classification system followed by classification symbols)
B44C1/17; B41M5/00; B41M5/382; B41M5/50; B41M5/52; C09J7/10; B32B7/023

Documentation searched other than minimum documentation to the extent that such documents are included in the fields searched
| | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2006-82489 A (DAINIPPON PRINTING CO., LTD.) 30 March 2006 (2006-03-30) claims, paragraphs [0010]–[0011], [0024]–[0028], [0035]–[0043], examples, fig. 2 | 1-10, 19-36<br>11-16<br>18 |
| X<br><br>Y | JP 2019-55573 A (DAINIPPON PRINTING CO., LTD.) 11 April 2019 (2019-04-11) claims, examples, fig. 2 | 1-9, 20-25, 28, 31, 34-36<br>3-4, 16-17, 19, 22-25, 28, 31, 34-36 |
| X | JP 62-124977 A (SANYO KOKUSAKU PULP CO., LTD.) 06 June 1987 (1987-06-06) entire text, all drawings | 1-2, 5-10, 16, 19, 22-23, 25, 27 |

☒ Further documents are listed in the continuation of Box C.  ☒ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 21 October 2020 (21.10.2020) | 02 November 2020 (02.11.2020) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

| | International application No. |
|---|---|
| | PCT/JP2020/030365 |

C (Continuation).   DOCUMENTS CONSIDERED TO BE RELEVANT

| Category* | Citation of document, with indication, where appropriate, of the relevant passages | Relevant to claim No. |
|---|---|---|
| X | JP 2000-218931 A (CANON INC.) 08 August 2000 (2000-08-08) entire text, all drawings | 1-2, 5-10, 16, 19, 22-23, 25, 27 |
| Y | | 3-4, 17, 20, 22-25, 28, 31, 34-36 |
| X | WO 2018/021572 A1 (FUJIFILM CORPORATION) 01 February 2018 (2018-02-01) claims, examples 10, 13 | 1-2, 5-9 |
| Y | | 3-4, 16-17, 19-20, 22-25, 28, 31, 34-36 |
| Y | WO 2019/151378 A1 (DAINIPPON PRINTING CO., LTD.) 08 August 2019 (2019-08-08) claims, examples | 11 |
| Y | JP 2002-254839 A (DAINIPPON PRINTING CO., LTD.) 11 September 2002 (2002-09-11) claims, examples | 11 |
| Y | JP 2002-254834 A (DAINIPPON PRINTING CO., LTD.) 11 September 2002 (2002-09-11) claims, examples | 11 |
| X | JP 8-276699 A (DAINIPPON PRINTING CO., LTD.) 22 October 1996 (1996-10-22) claims, examples | 12-16 |
| A | | 18 |
| Y | JP 8-276700 A (DAINIPPON PRINTING CO., LTD.) 22 October 1996 (1996-10-22) claims, examples | 12-16 |
| A | | 18 |
| Y | JP 2004-178906 A (POLYMATECH CO., LTD.) 24 June 2004 (2004-06-24) claims, examples | 12-16 |
| A | | 18 |
| Y | JP 2004-122542 A (CANON INC.) 22 April 2004 (2004-04-22) claims, examples | 16-17, 19 |
| Y | JP 2005-161810 A (CANON INC.) 23 June 2005 (2005-06-23) claims, examples | 16-17, 19 |
| Y | JP 8-39946 A (DAINIPPON PRINTING CO., LTD.) 13 February 1996 (1996-02-13) claims, examples | 16-17, 19 |

Form PCT/ISA/210 (continuation of second sheet) (January 2015)

INTERNATIONAL SEARCH REPORT
Information on patent family members

International application No.

PCT/JP2020/030365

| Patent Documents referred in the Report | Publication Date | Patent Family | Publication Date |
|---|---|---|---|
| JP 2006-82489 A | 30 Mar. 2006 | (Family: none) | |
| JP 2019-55573 A | 11 Apr. 2019 | (Family: none) | |
| JP 62-124977 A | 06 Jun. 1987 | (Family: none) | |
| JP 2000-218931 A | 08 Aug. 2000 | (Family: none) | |
| WO 2018/021572 A1 | 01 Feb. 2018 | US 2019/0152209 A1 examples 10, 13, claims EP 3492271 A1 CN 109476169 A | |
| WO 2019/151378 A1 | 08 Aug. 2019 | (Family: none) | |
| JP 2002-254839 A | 11 Sep. 2002 | (Family: none) | |
| JP 2002-254834 A | 11 Sep. 2002 | (Family: none) | |
| JP 8-276699 A | 22 Oct. 1996 | US 2002/0048663 A1 examples, claims EP 0767077 A1 | |
| JP 8-276700 A | 22 Oct. 1996 | (Family: none) | |
| JP 2004-178906 A | 24 Jun. 2004 | US 2004/0101662 A1 examples, claims EP 1424709 A1 CN 1502482 A KR 2004/0047595 A | |
| JP 2004-122542 A | 22 Apr. 2004 | (Family: none) | |
| JP 2005-161810 A | 23 Jun. 2005 | (Family: none) | |
| JP 8-39946 A | 13 Feb. 1996 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013043935 A